# EUROPEAN PATENT APPLICATION

(11) **EP 4 708 041 A1**
(43) Date of publication of application: **11.03.2026**
(21) Application number: 24847623.6
(22) Date of filing: 02.04.2024
(51) Int. Cl.: G06F 9/451, G06F 3/04845, H04M 1/72448, H04M 1/72454, H04M 1/72463

(54) **WALLPAPER SETTING METHOD AND ELECTRONIC DEVICE**

(30) Priority: 31.07.2023 CN 202310955084
(71) Applicant: Honor Device Co., Ltd., Shenzhen, Guangdong 518040 (CN)
(72) Inventor: LIU, Jiang, Shenzhen, Guangdong 518040 (CN)
(74) Representative: Isarpatent
(86) International application number: PCT/CN2024/085663
(87) International publication number: WO 2025/025657

(57) **Abstract**

Embodiments of this application provide a wallpaper setting method and an electronic device, and relate to the field of terminal technologies. The method includes: receiving a user's first operation of setting a first picture as wallpaper, where foreground of the first picture includes one or more objects; obtaining position information of a first-type pixel in the first image, where the first-type pixel is a pixel that is in the first picture and that belongs to the foreground; determining an object's highest point in the first picture based on the position information of the first-type pixel, where the object's highest point is a highest point among highest points of target objects among objects included in the foreground of the first picture; and cropping the first picture based on the object's highest point, and displaying a cropped first picture with a depth effect. In this way, in this application, an object's highest point in a photograph can be determined, to allow a user to set a photograph captured or downloaded as depth effect wallpaper, so as to meet a personalized requirement of the user.

## Description

This application claims priority to Chinese Patent Application No. 202310955084.3, filed with the China National Intellectual Property Administration on July 31, 2023 and entitled "WALLPAPER SETTING METHOD AND ELECTRONIC DEVICE", which is incorporated herein by reference in its entirety.

### TECHNICAL FIELD

This application relates to the field of terminal technologies, and in particular, to a wallpaper setting method and an electronic device.

### BACKGROUND

A lock screen image is an image displayed on a lock screen interface. For example, in a case that a lock screen password is set on an electronic device, the electronic device displays the lock screen image on the lock screen interface when a screen that was previously turned off is turned on again. With the rapid development of terminal technologies, manners in which lock screen images are displayed on electronic devices are increasingly diversified. For example, the display manners include, but are not limited to, a static lock screen image, a dynamic lock screen image, and a magazine-style lock screen image.

### SUMMARY

Embodiments of this application provide a wallpaper setting method and an electronic device. An object's highest point in a photograph can be determined, to allow a user to set a captured or downloaded photograph as depth effect wallpaper, so as to meet a personalized requirement of the user.

To achieve the foregoing objectives, embodiments of this application adopt the following technical solutions:

According to a first aspect, this application provides a wallpaper setting method, applied to an electronic device including a display screen. The method includes: receiving a user's first operation of setting a first picture as wallpaper, where foreground of the first picture includes one or more objects; obtaining position information of a first-type pixel in the first image, where the first-type pixel is a pixel that is in the first picture and that belongs to the foreground; and determining an object's highest point in the first picture based on the position information of the first-type pixel, where the object's highest point is a highest point among highest points of target objects among the objects included in the foreground of the first picture; and cropping the first picture based on the object's highest point, and displaying the cropped first picture with a depth effect.

In other words, in this application, the object's highest point may be first determined, then the first picture is cropped based on the object's highest point, and finally, a cropped picture may be displayed with the depth effect. In this way, in this application, a photograph captured or downloaded by a user can be set as depth effect wallpaper, to meet a personalized requirement of the user.

In an implementation provided in the first aspect, the obtaining position information of a first-type pixel of the first image includes: performing image matting on the first picture, to obtain an image matting result, where the image matting is for separating the foreground from non-foreground in the first picture, and the image matting result includes the first-type pixel; and obtaining the position information of the first-type pixel in the first image based on the image matting result. In other words, the foreground may be separated from the first picture through image matting, to determine the position information of the first-type pixel.

In an implementation provided in the first aspect, the target object is an object within a first range of the first picture, the first range includes a first boundary and a second boundary, and the method further includes: determining an object center of the first picture, where the object center reflects a center of the one or more objects in a horizontal direction; and moving from the object center a first distance in a first horizontal direction to obtain a first boundary, and moving from the object center the first distance in a second horizontal direction to obtain a second boundary, so as to obtain the first range. The first horizontal direction is opposite to the second horizontal direction.

In an implementation provided in the first aspect, the foreground includes one object, and a distance between the first boundary and the second boundary is greater than or equal to a width of a key region of the object; or the foreground includes a plurality of objects, and a distance between the first boundary and the second boundary is greater than or equal to a width of a first control. The first control is a control on an interface on which the cropped first picture is displayed with the depth effect. The first control is a control included in the first interface. The first interface is the interface on which the cropped first picture is displayed with the depth effect.

In other words, in cases where the foreground includes one object or a plurality of objects, the first range used for determining the object's highest point differs. When the foreground includes one object, the distance between the first boundary and the second boundary is greater than or equal to a width of a key region of the object, so that the first range can cover a region in which the object is located. In this case, the object's highest point is a highest point of the object. When the foreground includes a plurality of objects, the distance between the first boundary and the second boundary is greater than or equal to the width of the first control, so that the first range can cover a region in which the first control is located. In this case, the object's highest point is a highest point of an object in a region covered by the first control.

In an implementation provided in the first aspect, the object is a person image, and the key region of the object is a face region of the person object. In other words, when the object is a person image, the first range needs to cover a face region.

In an implementation provided in the first aspect, the object center is an axis of symmetry between a third boundary perpendicular to a first direction and a fourth boundary perpendicular to the first direction, position information of the object center is a coordinate of the axis of symmetry in the first direction, and the third boundary and the fourth boundary are two boundaries of the one or more objects in the first direction.

In an implementation provided in the first aspect, the determining an object center of the first picture includes: detecting the one or more objects in the first picture, to obtain position information of a key point in the first picture, where the position information of the key point includes a coordinate of the key point in the first direction; using a minimum coordinate of the key point in the first direction as a coordinate of the third boundary, and using a maximum coordinate of the key point in the first direction as a coordinate of the fourth boundary; and determining an axis of symmetry between the third boundary and the fourth boundary as the object center of the first picture based on the coordinate of the third boundary and the coordinate of the fourth boundary.

In an implementation provided in the first aspect, the object is a person image, and the key point is a face.

According to a second aspect, this application provides an electronic device. The electronic device includes: a memory, a processor, and a display screen.

The processor is coupled to the memory and the display screen. The memory is configured to store computer program code, and the computer program code includes computer instructions. When the computer instructions are executed by the processor, the electronic device is enabled to perform the method according to any one of the implementations in the first aspect.

According to a third aspect, this application provides a computer-readable storage medium. The computer-readable storage medium includes computer instructions. When the computer instructions are run on an electronic device, the electronic device is enabled to perform the method according to any one of the implementations in the first aspect.

According to a fourth aspect, this application provides a computer program product. When the computer program product is run on a terminal device, the terminal device is enabled to perform the method according to any one of the implementations in the first aspect.

For the technical effects brought by any one of the implementations in the second aspect to the fourth aspect, refer to the technical effects brought by different design methods in the first aspect. Details are not described herein again.

### BRIEF DESCRIPTION OF DRAWINGS

FIG. 1A is a schematic diagram of a lock screen interface on which depth effect wallpaper is used;
FIG. 1B is a schematic diagram of a lock screen interface on which non-depth effect wallpaper is used;
FIG. 2 is a schematic diagram of displaying a notification bar on a lock screen interface;
FIG. 3 is a schematic diagram of a structure of an electronic device according to an embodiment of this application;
FIG. 4 is a schematic diagram of a software hierarchy of an electronic device according to an embodiment of this application;
FIG. 5A to FIG. 5D are a schematic diagram of a group of interfaces according to an embodiment of this application;
FIG. 6 is a schematic diagram of an interface according to an embodiment of this application;
FIG. 7A and FIG. 7B are schematic diagrams of a group of interfaces according to an embodiment of this application;
FIG. 8A and FIG. 8B are schematic diagrams of a group of interfaces according to an embodiment of this application;
FIG. 9A is a schematic diagram of a mobile phone with a foldable screen according to an embodiment of this application;
FIG. 9B is a schematic diagram of an interface according to an embodiment of this application;
FIG. 9C is a schematic diagram of an interface according to an embodiment of this application;
FIG. 10 is a flowchart of a wallpaper setting method according to an embodiment of this application;
FIG. 11 is a schematic diagram of position information of a face according to an embodiment of this application;
FIG. 12 is a schematic diagram of distribution of persons according to an embodiment of this application;
FIG. 13 is a schematic diagram of distribution within a first range according to an embodiment of this application;
FIG. 14 is a marked diagram of parameter information according to an embodiment of this application;
FIG. 15 is a schematic diagram of a first crop region according to an embodiment of this application;
FIG. 16 is a schematic flowchart of a process of a wallpaper setting method according to an embodiment of this application;
FIG. 17 is a flowchart of another wallpaper setting method according to an embodiment of this application;
FIG. 18 is a schematic diagram of a process of determining a second crop region according to an embodiment of this application;
FIG. 19 is a comparison diagram of crop regions according to an embodiment of this application;
FIG. 20 is a flowchart of another wallpaper setting method according to an embodiment of this application;
FIG. 21A is a schematic diagram of an image matting process according to an embodiment of this application;
FIG. 21B is a flowchart of determining a portrait's highest point according to an embodiment of this application; and
FIG. 22 is a flowchart of still another wallpaper setting method according to an embodiment of this application.

### DESCRIPTION OF EMBODIMENTS

Technical solutions in embodiments of this application are described below with reference to accompanying drawings in embodiments of this application. In descriptions of embodiments of this application, terms used in the following embodiments are only intended to describe particular embodiments, and are not intended to limit this application. As used in the specification and the claims of this application, a singular expression "one", "a/an", "the", "foregoing", "the", or "this" is intended to include an expression "one or more", unless clearly indicated to the contrary in the context. It should be further understood that, in the following embodiments of this application, "at least one" and "one or more" mean one or at least two (including two). The term "and/or" is used to describe an association relationship between associated objects, indicating that there are three types of relationships. For example, A and/or B may represent the following cases: Only A exists, both A and B exist, and only B exists. A and B may be singular or plural. The character "/" in this specification generally indicates an "or" relationship between the associated objects.

Reference to "an embodiment" or "some embodiments" described, or the like in this specification means that one or more embodiments of this application include a specific feature, structure, or characteristic described with reference to embodiments. Therefore, the statements "in one embodiment", "in some embodiments", "in some other embodiments", "in other embodiments", and the like in the differences in this specification do not necessarily refer to the same embodiment, but mean "one or more but not all embodiments", unless otherwise specially emphasized in other ways. The terms "include", "comprise", "have", and variants thereof all mean "including but not limited to", unless otherwise specifically emphasized in another manner. The terms "first" and "second" are used merely for the purpose of description, and shall not be construed as indicating or implying relative importance or implying a quantity of indicated technical features.

In embodiments of this application, the term such as "example" or "for example" is used to represent giving an example, an illustration, or a description. Any embodiment or design solution described as "example" or "for example" in embodiments of this application should not be explained as being more preferred or having more advantages than another embodiment or design solution. Exactly, use of the term such as "example" or "for example" is intended to present relative concepts in a specific manner.

For ease of understanding, relative concepts in embodiments of this application are first briefly described.

A lock screen interface refers to an interface displayed when a device is in a screen-locked state.

Lock screen wallpaper refers to a picture used as background on a lock screen interface. The lock screen wallpaper may be static or dynamic.

A depth effect is a 3D visual layering effect, which can make a main photography object in wallpaper be highlighted. The main photography object may be referred to as foreground of the wallpaper, for example, a person, a mountain, a flower, and an animal. In embodiments of this application, when lock screen wallpaper is displayed with a depth effect, part of a region of a control (for example, a clock control) on a lock screen interface is obscured by foreground.

Depth effect wallpaper is wallpaper displayed with a depth effect. The depth effect wallpaper may include foreground and background, and the background includes content of the foreground.

Non-depth effect wallpaper is wallpaper displayed without a depth effect.

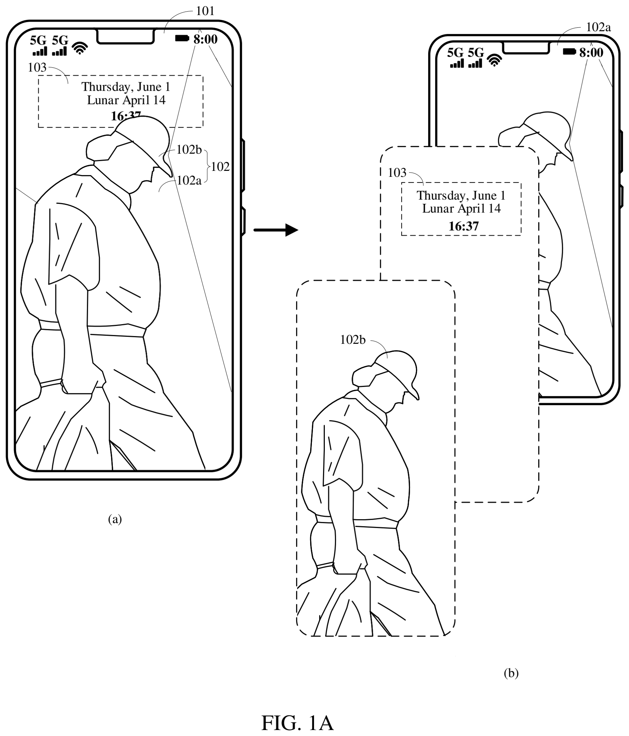

For example, FIG. 1A is a schematic diagram of a lock screen interface using depth effect wallpaper. As shown in (a) of FIG. 1A, a lock screen interface 101 includes lock screen wallpaper 102 and a clock control 103. The lock screen lock wallpaper 102 includes background 102a and foreground 102b. As shown in (b) of FIG. 1A, the lock screen interface 101 includes at least three layers, which are respectively a layer on which the background 102a is located, a layer on which the clock control 103 is located, and a layer on which the foreground 102b is located. The layer on which the clock control 103 is located is above the layer on which the background 102a is located, and the layer on which the foreground 102b is located is above the layer on which the clock control 103 is located. When the foregoing three layers overlap, as shown in (a) of FIG. 1A, part of a region of the clock control 103 is obscured by the foreground 102b. In addition, as shown in (b) of FIG. 1A, the background 102a includes all content on the lock screen wallpaper 102, and the foreground 102b includes only a main object on the lock screen wallpaper 102, that is, a person on the lock screen wallpaper 102.

It should be noted that dashed lines in FIG. 1A are only used for marking regions and do not actually exist. For example, the clock control 103 is a view (view) control, and does not include a dashed line around the clock control. In addition, the clock control may also be referred to as a time indicator or another name.

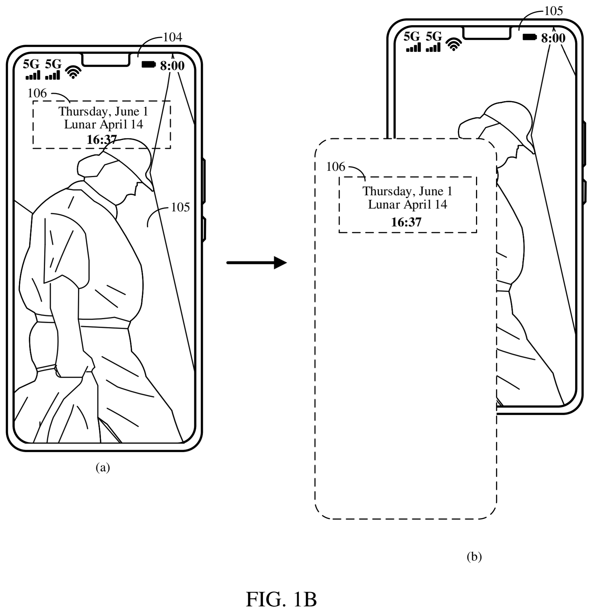

FIG. 1B is a schematic diagram of a lock screen interface using non-depth effect wallpaper. As shown in (a) of FIG. 1B, a lock screen interface 104 includes lock screen wallpaper 105 and a clock control 106. As shown in (b) of FIG. 1B, the lock screen interface 104 includes at least two layers, which are respectively a layer on which the lock screen wallpaper 105 is located and a layer on which the clock control 106 is located. The layer on which the clock control 106 is located is above the layer on which the lock screen wallpaper 105 is located. When the foregoing two layers overlap, the lock screen wallpaper 105 is partially obscured by the clock control 106, and the clock control 106 may be completely displayed.

Optionally, in another implementation, the lock screen interface 104 may alternatively be similar to the lock screen interface 101 shown in (b) of FIG. 1A, and also includes at least three layers. A difference lies in that, in FIG. 1B, the layer on which the clock control 106 is located is above a layer on which foreground of the lock screen wallpaper 105 is located and a layer on which background of the lock screen wallpaper 105 is located.

It can be learned by comparing FIG. 1A and FIG. 1B that, the foreground and the background are set for the depth effect wallpaper, and the control (for example, the clock control 106) on the lock screen interface is embedded between the background (for example, the background 102a) and the foreground (for example, the foreground 102b) of the lock screen wallpaper, so that the foreground can be presented to a user in a form of a 3D effect, and a visual effect of the foreground is more three-dimensional. This can bring good visual experience to the user.

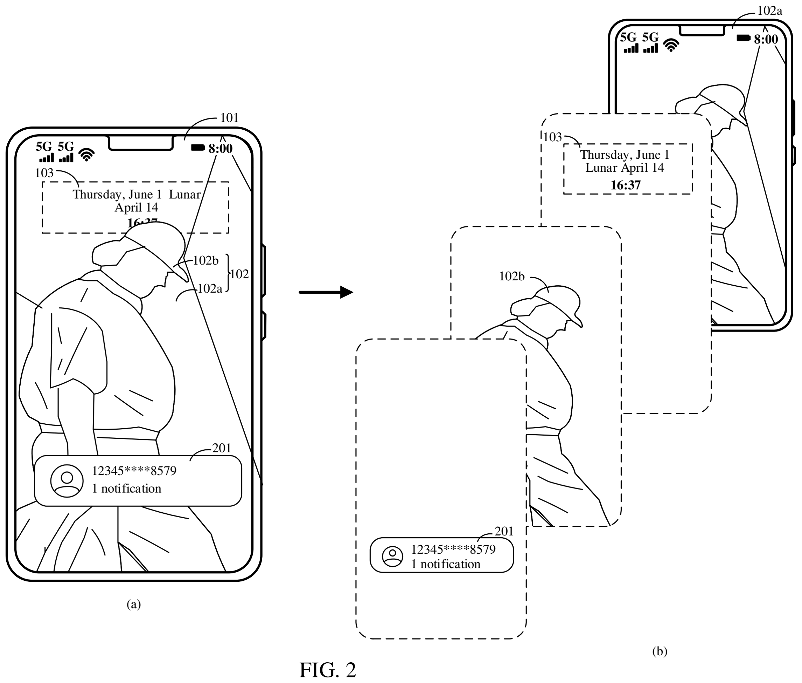

If a device receives a notification when the device is in a screen-locked state, the device may display the notification on a lock screen interface. For example, FIG. 2 is a schematic diagram of a lock screen interface when the device receives the notification. As shown in (a) of FIG. 2, the lock screen interface 101 further includes a notification bar 201. As shown in (b) of FIG. 2, a layer on which the notification bar 201 is located is above a layer on which the foreground 102b is located.

It should be noted that the notification shown in FIG. 2 is merely an example. The lock screen interface 101 may alternatively display detailed information about the notification. Alternatively, the notification may be a notification of another application such as a social application or a game application. This is not specifically limited herein.

In a related technology, only wallpaper with a preset foreground and background by a developer can support a depth effect, and a photograph captured or a picture downloaded by a user does not support the depth effect. This cannot meet a personalized requirement of the user.

In view of this, an embodiment of this application provides a wallpaper setting method. An object's highest point in a photograph can be determined, and the photograph can be cropped based on the object's highest point, so that a device displays the cropped photograph with a depth effect, to allow the user to set a captured or downloaded photograph as depth effect wallpaper, thereby meeting a personalized requirement of the user.

It should be noted that the wallpaper setting method provided in embodiments of this application can be applied to an electronic device. The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, or a smart home device and/or a smart city device. A specific type of the electronic device is not specifically limited in embodiments of this application.

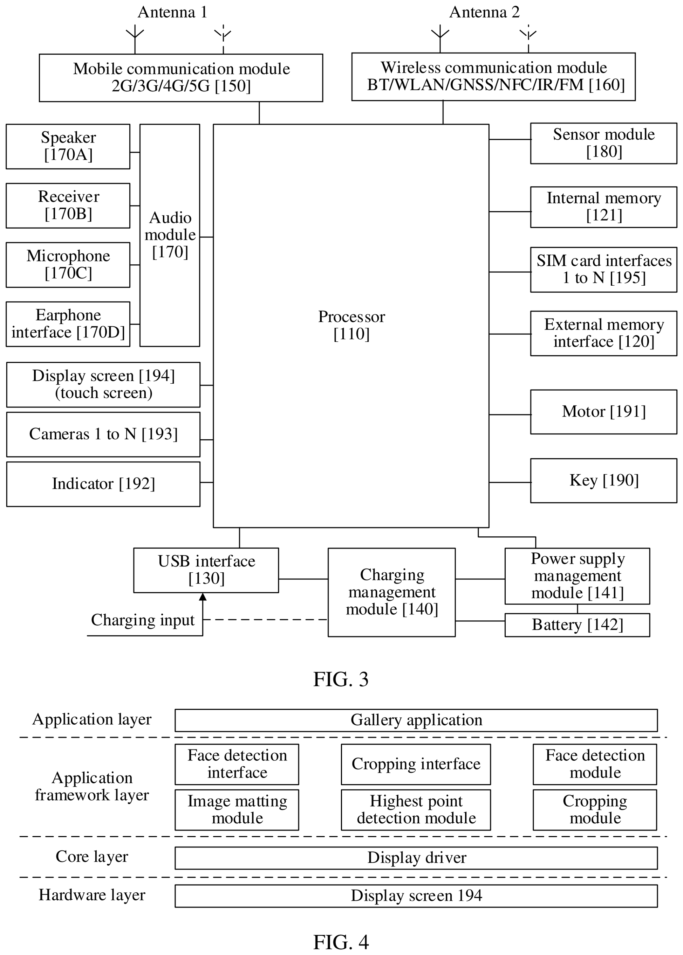

FIG. 3 is a schematic diagram of a structure of an electronic device according to an embodiment of this application. As shown in FIG. 3, the electronic device may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, an earphone interface 170D, a sensor module 180, a key 190, a motor 191, an indicator 192, a camera 193, a display screen 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, a neural-network processing unit (neural-network processing unit, NPU), and/or the like. Different processing units may be separate devices, or may be integrated to one or more processors.

The controller may be a nerve center and command center of the electronic device. The controller may generate an operation control signal based on an instruction operation code and a sequence signal, to control instruction fetching and instruction execution.

A memory may be further disposed in the processor 110, to store instructions and data. In some embodiments, the memory in the processor 110 is a cache. The memory may store instructions or data that has just been used or is cyclically used by the processor 110. If the processor 110 needs to use the instructions or the data again, the processor may directly invoke the instructions or the data from the memory. This avoids repeated access, and reduces waiting time of the processor 110, so that system efficiency is improved. In this embodiment of this application, the processor 110 may determine a crop region of a picture, and perform an operation such as cropping on the picture based on the determined crop region.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment is merely an example for descriptions, and does not constitute a limitation on the structure of the electronic device. In some other embodiments, the electronic device may alternatively use an interface connection manner different from that in the foregoing embodiment, or use a combination of a plurality of interface connection manners.

The external memory interface 120 may be configured to be connected to an external storage card, for example, a Micro SD card, to expand a storage capacity of the electronic device. The external storage card communicates with the processor 110 via the external memory interface 120, to implement a data storage function, for example, to store files such as music and a video into the external memory card.

The internal memory 121 may be configured to store computer executable program code, and the executable program code includes instructions. The processor 110 runs the instructions stored in the internal memory 121, to implement various functional applications and data processing of the electronic device. For example, in this embodiment of this application, the processor 110 may execute the instructions stored in the internal memory 121. The internal memory 121 may include a program storage region and a data storage region.

The program storage region may store an operating system, an application required by at least one function (such as a voice playing function and an image playing function), and the like. The data storage region may store data (for example, audio data and an address book) and the like created when the electronic device is used. In addition, the internal memory 121 may include a high-speed random access memory, and may further include a non-volatile memory such as at least one magnetic disk storage device, a flash memory, or a universal flash storage (universal flash storage, UFS). In this embodiment of this application, the internal memory 121 may further store picture data, a parameter needed by the processor 110 in a process of determining a crop region, a parameter of the crop region determined by the processor 110, and the like.

The charging management module 140 is configured to receive a charging input from a charger. The charger may be a wireless charger or a wired charger. When the charging management module 140 charges the battery 142, the power management module 141 may also supply power to the electronic device.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communication module 160, and the like. In some embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem processor, the baseband processor, and the like. In some embodiments, in the electronic device, the antenna 1 is coupled to the mobile communication module 150, and the antenna 2 is coupled to the wireless communication module 160, so that the electronic device can communicate with a network and another device by using a wireless communication technology.

The antenna 1 and the antenna 2 are configured to transmit and receive an electromagnetic wave signal. Each antenna in the electronic device may be configured to cover one or more communication frequency bands. Different antennas may further be reused to improve antenna utilization. For example, the antenna 1 may be reused as a diversity antenna of a wireless local area network. In some other embodiments, the antennas may be used in combination with a tuning switch.

The mobile communication module 150 may provide a solution applied to the electronic device for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation.

The mobile communication module 150 may further amplify a signal obtained after the modem processor performs demodulation, and convert the signal into an electromagnetic wave for radiation through the antenna 1. In some embodiments, at least some of functional modules of the mobile communication module 150 may be disposed in the processor 110. In some embodiments, the at least some of the functional modules of the mobile communication module 150 may be disposed in a same device as at least some of modules of the processor 110.

The wireless communication module 160 may provide a solution for wireless communication including a WLAN (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like that are applied to the electronic device.

The wireless communication module 160 may be one or more devices integrating at least one communication processing module. The wireless communication module 160 receives an electromagnetic wave through the antenna 2, performs frequency modulation and filtering on an electromagnetic wave signal, and transmits the processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

The electronic device implements a display function through the GPU, the display screen 194, the application processor, and the like. The GPU is an image processing microprocessor, and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, or the like. The display screen 194 includes a display panel. In this embodiment of this application, the display screen 194 may be configured to display a lock screen interface, a lock screen preview interface, and the like. Optionally, the display screen 194 may be a touch screen. The touch screen may receive a user operation of setting wallpaper, and display the foregoing lock screen preview interface.

The electronic device may implement a photographing function through the ISP, the camera 193, the video encoder and decoder, the GPU, the display screen 194, the application processor, and the like. The ISP is configured to process data fed back by the camera 193. The camera 193 is configured to capture a still image or a video. In some embodiments, the electronic device may include 1 or N cameras 193. N is a positive integer greater than 1.

The electronic device may use the audio module 170, the speaker 170A, the receiver 170B, the microphone 170C, the earphone interface 170D, the application processor, and the like, to implement an audio function, such as music playback and recording. The 190 includes a power-on key, a volume key, and the like. The key 190 may be a mechanical key, or may be a touch-type key. The motor 191 may generate a vibration prompt. The motor 191 may be used for an incoming call vibration prompt, or may be used for touch vibration feedback. The indicator 192 may be an indicator light, and may be configured to indicate a charging state and a power change, or may be configured to indicate a message, a missed call, a notification, and the like. The SIM card interface 195 is configured to connect to a SIM card. The SIM card may be inserted into the SIM card interface 195 or removed from the SIM card interface 195, to be in contact with and be separated from the electronic device. The electronic device may support 1 or N SIM card interfaces, and N is a positive integer greater than 1. The SIM card interface 195 may support a Nano SIM card, a Micro SIM card, a SIM card, and the like.

The sensor module 180 may include sensors such as a pressure sensor, a gyroscope sensor, a barometric pressure sensor, a magnetic sensor, an acceleration sensor, a distance sensor, a proximity light sensor, a fingerprint sensor, a temperature sensor, a touch sensor, an ambient light sensor, and a bone conduction sensor.

It may be understood that the structure illustrated in this embodiment constitutes no specific limitation on the electronic device. In some other embodiments, the electronic device may include more or fewer components than those shown in the figure, some components may be combined, some components may be split, or a different component deployment may be used. The components shown in the figure may be implemented by using hardware, software, or a combination of software and hardware.

A software system of the electronic device may use a layered architecture, an event-driven architecture, a micro core architecture, a micro service architecture, or a cloud architecture. For example, a software structure of the electronic device is described by using a layered architecture shown in FIG. 4.

The layered architecture divides software into a plurality of layers, and each layer has a clear role and task. Layers communicate with each other through an interface. In some embodiments, a terminal device may include an application layer, an application framework layer, and a core layer. It should be noted that the layered architecture shown in FIG. 4 is merely for an illustration, and in different operating systems (such as an Android^{™} system and an IOS system), provided that the functions implemented by each functional module are similar to those of embodiments of this application, the solutions of this application can also be implemented.

The application layer may include a series of applications. As shown in FIG. 4, the application layer may include an application such as Gallery. A gallery application allows a user to view and manage pictures captured or downloaded by the user, and provides an entry for setting a picture as lock screen wallpaper.

The application program framework layer provides an application programming interface (application programming interface, API) and a programming framework for application programs at the application program layer. The API may include an object detection interface (which may also be referred to as a first interface), a cropping interface (a second interface), and the like.

The application framework layer further includes some predefined functions. For example, an object detection module, an image matting module, a highest point detection module, a cropping module, and the like may be included. This is not limited in this embodiment of this application.

The object detection module is configured to perform object detection on a picture (for example, a to-be-processed picture transmitted by using the gallery application), to obtain a detection result about whether the picture includes an object, and determine position information of the object when the picture includes the object. The object may be a person image (which may be briefly referred to as a portrait), a flower, a tree, an animal, a fruit, or the like.

The object detection module may include one or more of a face detection module, an animal detection module, and a fruit detection module, which are respectively configured to detect a face, an animal, a fruit, and the like in a picture and obtain corresponding position information.

In this embodiment of this application, an application (for example, the foregoing gallery application) may invoke the object detection module via the foregoing object detection interface, and detect, by using the object detection module, whether there is a corresponding object in the picture.

The image matting module is configured to separate foreground in the picture from the picture, to obtain an image matting result.

The highest point detection module is configured to determine an object's highest point (which may also be referred to as a target point) in the picture. For explanations about the object's highest point, refer to the following descriptions, and details are not described herein.

The cropping module is configured to determine a crop region based on the object's highest point and an object center.

In this embodiment of this application, the gallery application may invoke the cropping module via the foregoing cropping interface, to determine the crop region of the picture.

The core layer is a layer between hardware and software. The core layer includes at least a display driver and the like.

As shown in FIG. 4, the electronic device further includes a hardware layer. The hardware layer may include the foregoing display screen 194, configured to display all interfaces in a process of setting lock screen wallpaper, and provide interaction between the electronic device and a user.

A wallpaper setting method provided in this application is described in detail below with reference to the accompanying drawings by using an example in which the electronic device is a mobile phone and an object is a portrait.

In some embodiments, the mobile phone has a function that allows a user to set wallpaper by itself.

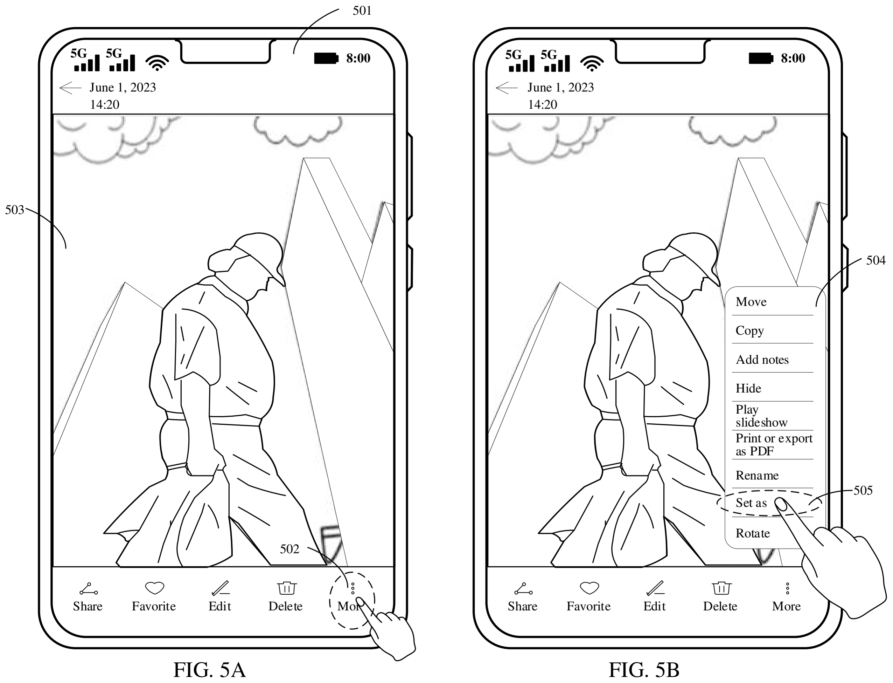

For example, as shown in FIG. 5A, the mobile phone may set a "more" button 502 at a position such as a picture preview interface 501. The picture preview interface 501 further includes a previewed picture. For example, the picture preview interface 501 includes a previewed picture 503. When a user needs to perform a further operation on the picture 503, for example, an operation such as moving, copying, or setting the picture 503 as wallpaper, the user may tap the "more" button 502. In response to a tap operation of the user on the "more" button 502, the mobile phone may present a plurality of operation options to the user for the user to make a selection.

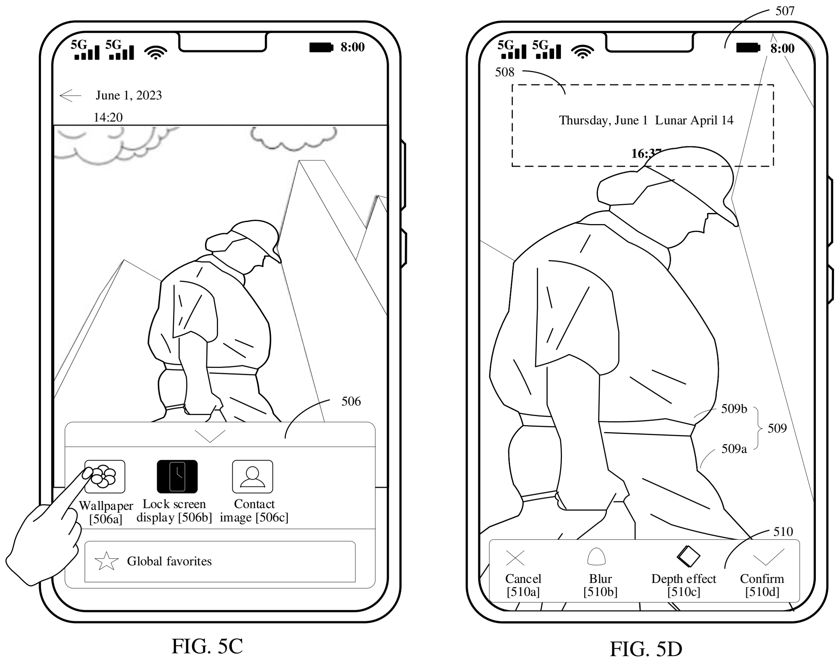

In this embodiment of this application, in response to an operation of the user on the "more" button 502, the mobile phone may display a function bar 504. As shown in FIG. 5B, the function bar 504 may provide a plurality of options. The plurality of options include, but are not limited to, options such as "move", "copy", and "set as" 505. In response to an operation of the user on the "set as" option 505, the mobile phone may display an option bar 506. The option bar 506 is configured to provide the user with a plurality of use options of the picture 503, and each use option corresponds to one use of the picture 503. As shown in FIG. 5C, the plurality of use options may include "wallpaper" 506a, "lock screen display" 506b, "contact image" 506c, and the like, which are respectively used for setting the picture 503 as wallpaper, setting the picture 503 as a picture representing lock screen display, and setting the picture 503 as a contact image.

In response to an operation of the user on "wallpaper" 506a, the mobile phone may display a lock screen preview interface. The lock screen preview interface is used for previewing a lock screen interface of the mobile phone, and the lock screen preview interface may include lock screen wallpaper. The lock screen wallpaper may be a picture obtained by cropping the picture 503 by the mobile phone, or may be the picture 503.

For another example, the mobile phone may further set, on a thumbnail interface of a gallery application, a function option that can be used for setting wallpaper. The thumbnail interface is used for displaying a thumbnail of a photography or a video. In this way, the user may set the photograph as depth effect wallpaper by using the function option without opening a full-size image, thereby simplifying user operations.

In this embodiment of this application, the mobile phone may display, on the lock screen preview interface, the lock screen wallpaper with a depth effect or without the depth effect based on whether the picture 503 supports the depth effect. For a process of determining whether the picture 503 supports the depth effect, refer to S210 to S250, S310 to S360, and details are not described herein.

If the picture 503 supports the depth effect, the mobile phone displays, on the lock screen preview interface, the lock screen wallpaper with the depth effect. If the picture 503 does not support the depth effect, the mobile phone displays, on the lock screen preview interface, the lock screen wallpaper without the depth effect.

For example, when the picture 503 supports the depth effect, the lock screen preview interface may be a lock screen preview interface 507 shown in FIG. 5D. As shown in FIG. 5D, the lock screen preview interface 507 includes a clock control 508, lock screen wallpaper 509, and a function bar 510. The clock control 508 is configured to display current time, including year, month, day, time, minute, and the like. The lock screen wallpaper 509 includes background 509a and foreground 509b. The clock control 508 is partially obscured by the foreground 509b, to indicate that the lock screen wallpaper 509 is displayed with the depth effect. The function bar 510 includes options such as cancel 510a, blur 510b, depth effect 510c, and confirm 510d.

In another implementation, a representation form of the clock control 508 is not limited to the representation form in FIG. 5A to FIG. 5D. For example, the clock control may alternatively not include a date and a week, or a digit (for example, "16:37") indicating current time in the clock control may be presented in the form of Chinese character (for example, 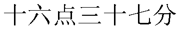 ), an image, or the like.

If an operation of tapping the cancel 510a by the user is detected, the mobile phone may stop displaying the lock screen preview interface 507, and redisplay the interface 501.

If an operation of tapping the blur 510b by the user is detected, the mobile phone may blur/unblur the background (that is, a region other than the foreground) of the lock screen wallpaper 509.

If an operation of tapping the depth effect 510c by the user is detected, the mobile phone may enable/disable the depth effect of the lock screen wallpaper 509.

If an operation of tapping the confirm 510d by the user is detected, the mobile phone may save this operation of setting the wallpaper. After the mobile phone saves the operation of setting the wallpaper, a lock screen interface of the mobile phone may be shown as (a) of FIG. 1A. Optionally, in response to the operation of tapping the confirm 510d by the user, the mobile phone may further redisplay the interface 501.

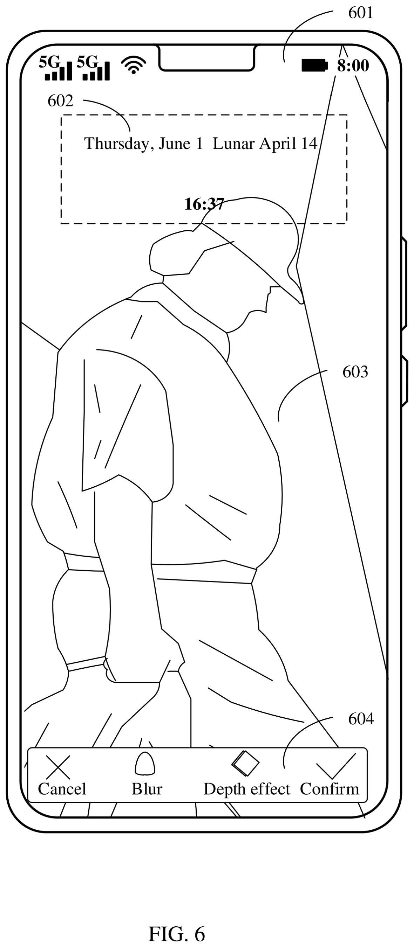

For example, when the picture 503 does not support the depth effect, the lock screen preview interface may be a lock screen preview interface 601 shown in FIG. 6. The lock screen preview interface 601 includes a clock control 602, lock screen wallpaper 603, and a function bar 604. The lock screen preview interface 601 shown in FIG. 6 is similar to the lock screen preview interface 507 shown in FIG. 5D. A difference lies in that, in the lock screen preview interface 601, the clock control 602 is located above the lock screen wallpaper 603 and partially obscures the lock screen wallpaper 603.

In this embodiment of this application, in response to a preset operation performed by the user on the lock screen wallpaper on the lock screen preview interface, the mobile phone may adjust the lock screen wallpaper, for example, enlarge/reduce the lock screen wallpaper, or move the wallpaper in any direction. The preset operation includes two-finger pinching, two-finger opening, sliding/swiping in any direction, and the like.

In addition, in response to the foregoing preset operation, the mobile phone may further display, if the adjusted lock screen wallpaper supports the depth effect, the adjusted lock screen wallpaper with the depth effect, and display, if the adjusted lock screen wallpaper does not support the depth effect, the adjusted lock screen wallpaper without the depth effect.

If the lock screen wallpaper before adjustment supports the depth effect and the lock screen wallpaper after adjustment does not support the depth effect, the lock screen wallpaper is switched from having the depth effect to not having the depth effect. Alternatively, if the lock screen wallpaper before adjustment does not support the depth effect, and the lock screen wallpaper after adjustment supports the depth effect, the lock screen wallpaper is switched from not having the depth effect to having the depth effect. It can be learned that in a process in which the mobile phone adjusts the lock screen wallpaper, the lock screen wallpaper may be switched between having the depth effect and not having the depth effect.

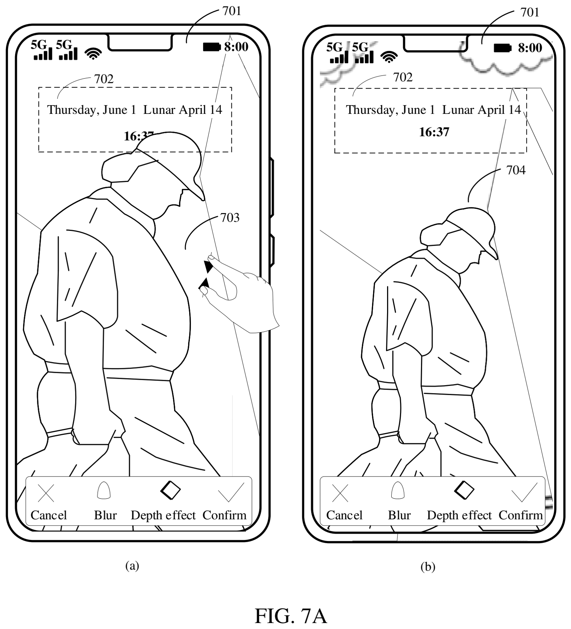

For example, in response to receiving a two-finger pinching operation performed by the user on the lock screen preview interface, the mobile phone may reduce the lock screen wallpaper on the lock screen preview interface. For example, as shown in (a) of FIG. 7A, the mobile phone may display a lock screen preview interface 701. The lock screen preview interface 701 includes a clock control 702 and lock screen wallpaper 703 displayed with a depth effect. The mobile phone may receive a two-finger pinching operation performed by the user on the lock screen wallpaper 703. In response to the operation, as shown in (b) of FIG. 7A, the mobile phone displays lock screen wallpaper 704 on the lock screen preview interface 701. The lock screen wallpaper 704 is the reduced lock screen wallpaper 703, and the lock screen wallpaper 704 is displayed without the depth effect.

For another example, in response to receiving a two-finger opening operation performed by the user on the lock screen wallpaper, the mobile phone may enlarge the lock screen wallpaper on the lock screen preview interface. For example, in response to a two-finger opening operation performed by the user on the lock screen wallpaper 704, the mobile phone may switch the picture from the lock screen wallpaper 704 in FIG. 7A to the lock screen wallpaper 703 in FIG. 7A, that is, enlarge the lock screen wallpaper and switch from displaying the lock screen wallpaper without the depth effect to displaying the lock screen wallpaper with the depth effect.

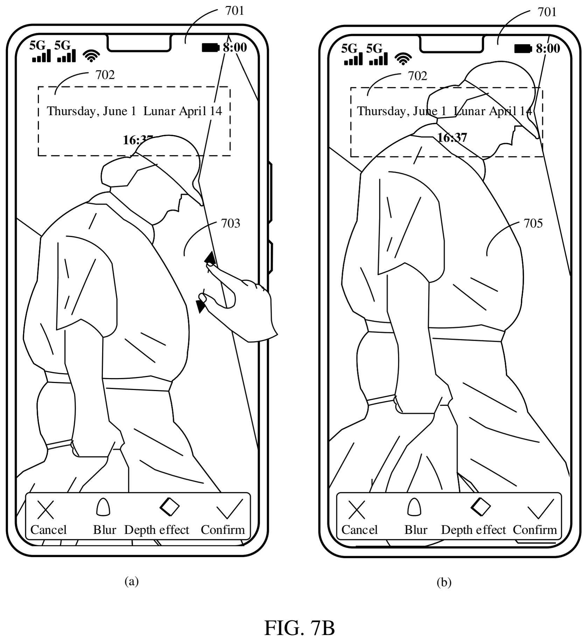

For another example, as shown in (a) of FIG. 7B, the mobile phone may receive a two-finger opening operation performed by the user on the lock screen wallpaper 703. In response to the operation performed by the user, as shown in (b) of FIG. 7B, the mobile phone displays lock screen wallpaper 705 on the lock screen preview interface 701. The lock screen wallpaper 705 is the enlarged lock screen wallpaper 703, and the lock screen wallpaper 705 is displayed without the depth effect.

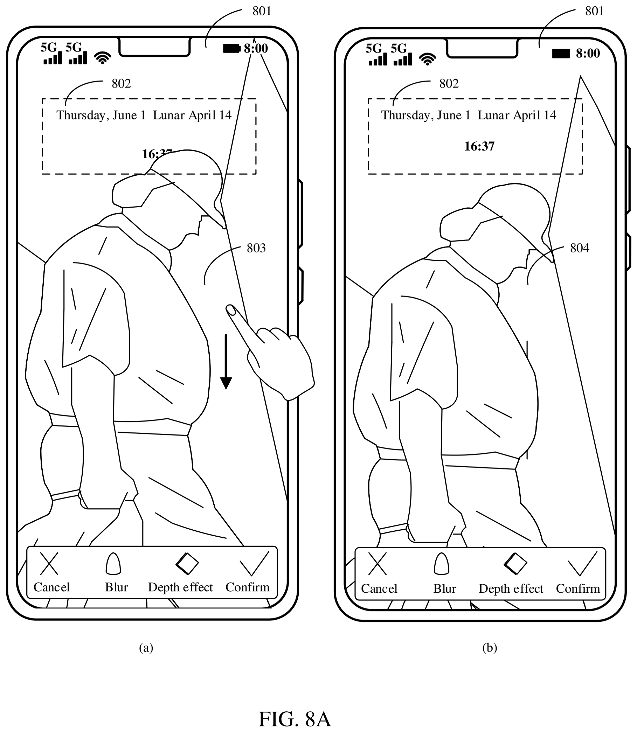

For another example, in response to receiving a slide down operation performed by the user on the lock screen preview interface, the mobile phone may move down the lock screen wallpaper. For example, as shown in (a) of FIG. 8A, the mobile phone may display a lock screen preview interface 801. The lock screen preview interface 801 includes a clock control 802 and lock screen wallpaper 803 displayed with a depth effect. The mobile phone may receive a slide down operation performed by the user on the lock screen wallpaper 803, and in response to the operation, the mobile phone displays lock screen wallpaper 804 on the lock screen preview interface 801. The lock screen wallpaper 804 is the lock screen wallpaper 803 moved down, and the lock screen wallpaper 804 is displayed without the depth effect.

For another example, in response to a slide up operation performed the user on the lock screen preview interface, the mobile phone may move up the lock screen wallpaper. For example, after receiving a slide up operation performed by the user on the lock screen wallpaper 804, the mobile phone may switch the picture from the lock screen wallpaper 804 in (b) of FIG. 8A to the lock screen wallpaper 803 in (b) of FIG. 8A, that is, move up the lock screen wallpaper and switch from displaying the lock screen wallpaper without the depth effect to displaying the lock screen wallpaper with the depth effect.

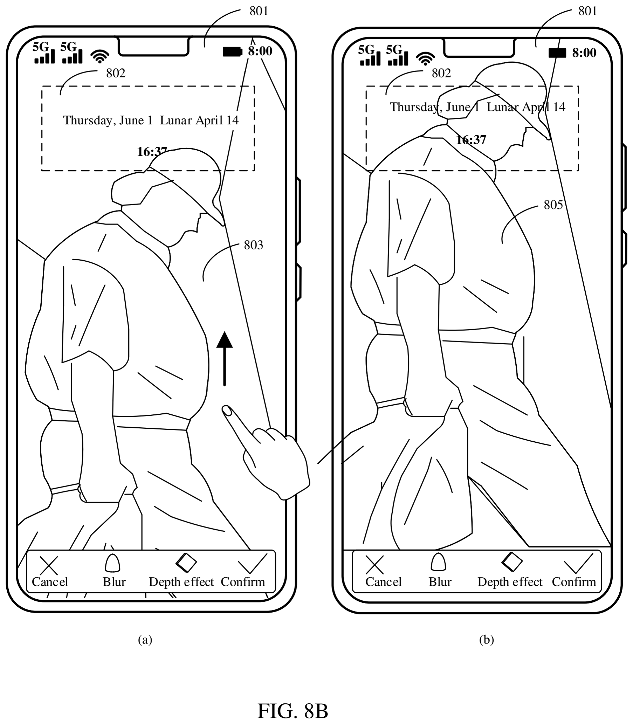

For another example, as shown in (a) of FIG. 8B, the mobile phone may receive a slide up operation performed by the user on the lock screen wallpaper 803. In response to the operation, as shown in (b) of FIG. 8B, the mobile phone displays lock screen wallpaper 805 on the lock screen preview interface 801. The lock screen wallpaper 805 is the lock screen wallpaper 803 moved up, and the lock screen wallpaper 805 is displayed without the depth effect.

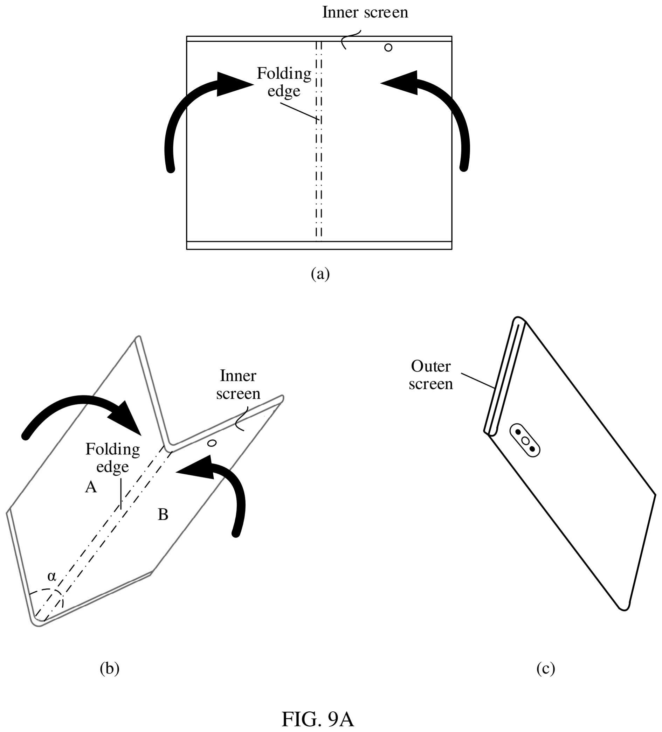

In an optional implementation, when a display screen of the mobile phone is a foldable screen, the user may select to set a picture as lock screen wallpaper of an inner screen or lock screen wallpaper of an outer screen. FIG. 9A is a schematic diagram of an appearance of a mobile phone with a foldable screen. (a) of FIG. 9A is a schematic diagram of a form of the mobile phone in a fully-extended state. (b) of FIG. 9A is a schematic diagram of a form of the mobile phone in a semi-extended state. (c) of FIG. 9A is a schematic diagram of a form of the mobile phone in a folded state. After the foldable screen shown in (a) of FIG. 9A is folded along a folding edge, a screen A and a screen B shown in (b) of FIG. 9A may be formed. As shown in FIG. 9A, the mobile phone may include an inner screen and an outer screen. When the mobile phone is in the folded state, the outer screen may be used for displaying an image. When the mobile phone is in an extended state, both the inner screen and the outer screen may be used for displaying images.

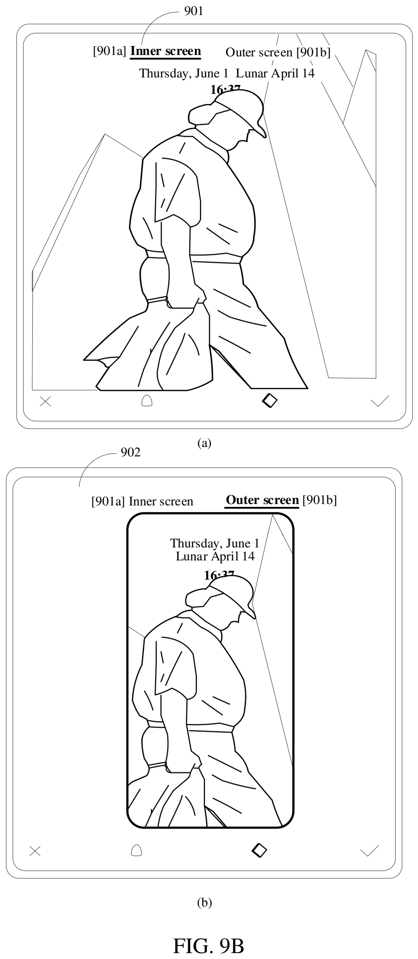

Both the inner screen and the outer screen of the mobile phone support a user operation of setting wallpaper. FIG. 9B shows an interface of setting depth effect wallpaper on an outer screen of a mobile phone with a foldable screen. As shown in FIG. 9B, when the mobile phone is a mobile phone with a foldable screen, a lock screen preview interface further includes an inner screen option 901a and an outer screen option 901b. When the inner screen option 901a is selected, the mobile phone may display an interface 901 shown in (a) of FIG. 9B. The interface 901 may be used for previewing a lock screen preview interface of the inner screen. When the outer screen option 901b is selected, the mobile phone may display an interface 902 shown in (b) of FIG. 9B. The interface 902 may be used for previewing a lock screen preview interface of the outer screen.

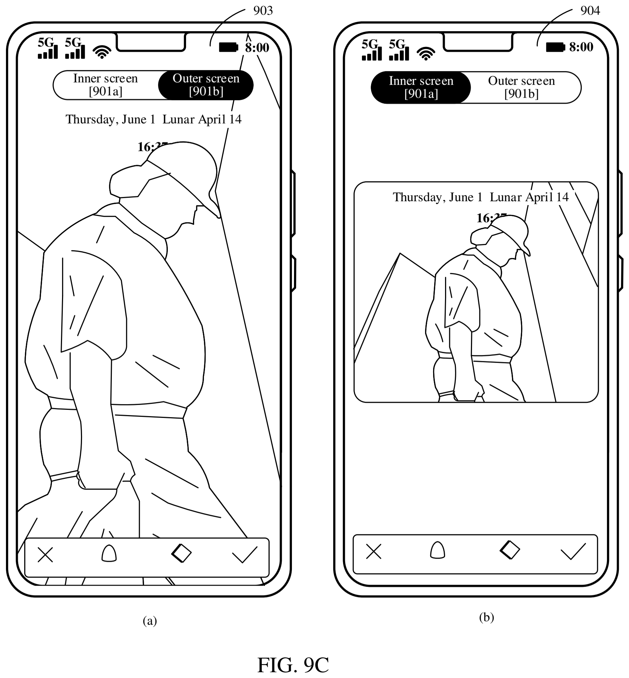

FIG. 9C shows an interface of setting depth effect wallpaper on an outer screen of a mobile phone with a foldable screen. As shown in FIG. 9C, if the user sets depth effect wallpaper on the outer screen, when the outer screen option 901b is selected, the mobile phone may display an interface 903 shown in (a) of FIG. 9C. The interface 901 may be used for previewing a lock screen preview interface of the outer screen. When the inner screen option 901a is selected, the mobile phone may display an interface 904 shown in (b) of FIG. 9C. The interface 904 may be used for previewing a lock screen preview interface of the inner screen.

It can be learned by comparing the interface 901 with the interface 902, and the interface 903 with the interface 904 that, when previewing a lock screen preview interface, the mobile phone may preview with reference to a shape of the inner screen or the outer screen. This not only facilitates distinguishing by the user, but also makes it easier for the user to understand a lock screen effect.

The following describes the specific implementations of the wallpaper setting method provided in embodiments of this application in detail with reference to the accompanying drawings.

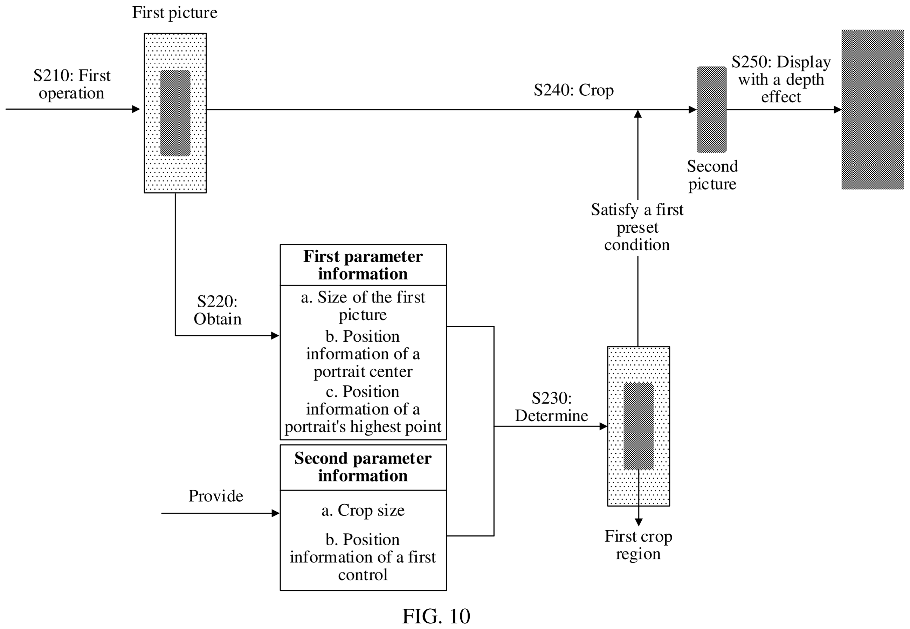

FIG. 10 is a flowchart of a wallpaper setting method according to an embodiment of this application. The wallpaper setting method can be applied to the electronic device shown in FIG. 3. As shown in FIG. 10, the wallpaper setting method includes S210 to S250.

S210: Receive a user's first operation of setting a first picture as wallpaper.

The first picture is a picture that the user selects to set as wallpaper, and may be a photograph captured by the user, or may be a picture downloaded by the user from a network or a picture from another source. This is not specifically limited herein.

For example, the first picture may be the picture 503 in FIG. 5A to FIG. 5D. The first operation may be a user operation of tapping "wallpaper" 506a. Alternatively, the first operation may include a user operation of tapping the "more" button 502, a user operation of tapping "set as" 505, or a user operation of tapping "wallpaper" 506a. Alternatively, the first operation may be another operation through which the first picture can be set as wallpaper. This is not specifically limited herein.

S220: Obtain first parameter information of the first picture in response to the first operation.

The first parameter information includes a size of the first picture, and position information of a portrait center and position information of a portrait's highest point in the first picture.

In this embodiment of this application, the mobile phone can obtain the size of the first picture. The size of the first picture may refer to a width and a height of the first picture, and may be represented by "width*height". For example, if the size of the first picture is 1980* 1080, it indicates that the width of the first picture is 1980 pixels, and the height is 1080 pixels. For another example, the size of the first picture may alternatively be 800*600, 1280*720, or the like. This is not specifically limited herein.

The first picture may include one or more person images (which may be referred to as portraits).

In this embodiment of this application, the portrait center is used for reflecting distribution of all person images in the first picture in a horizontal direction. The portrait center may be an axis of symmetry between a third boundary perpendicular to an x-axis and a fourth boundary perpendicular to the x-axis. The third boundary and the fourth boundary are two boundaries of the one or more person images in the first direction.

The position information of the portrait center may be a coordinate of the axis of symmetry on the x-axis, where the x-axis is a straight line along the width of the picture. A direction in which the x-axis is located may also be referred to as the first direction.

It should be noted that the portrait center is the axis of symmetry between the third boundary perpendicular to the x-axis and the fourth boundary perpendicular to the x-axis, and does not indicate that the first picture is symmetric about the portrait center in an x-axis direction.

In an optional implementation, the third boundary is a left boundary of a face bounding box of a leftmost person image in the first picture, and the fourth boundary is a right boundary of a face bounding box of a rightmost person image in the first picture. The mobile phone may determine the third boundary based on position information of the leftmost face in the first picture, and determine the fourth boundary based on position information of the rightmost face in the first picture. It should be noted when the first picture includes only one person image, the leftmost person image and the rightmost person image are a same person image. Correspondingly, the leftmost face and the rightmost face are a face of a same person image.

For ease of understanding, position information of a face is first described below with reference to the accompanying drawings.

In an optional implementation, the position information of the face may include coordinates of two diagonal vertexes of a face bounding box. The two diagonal vertexes may be an upper-left vertex and a lower-right vertex of the face bounding box, or a lower-left vertex and an upper-right vertex of the face bounding box. This is not specifically limited herein.

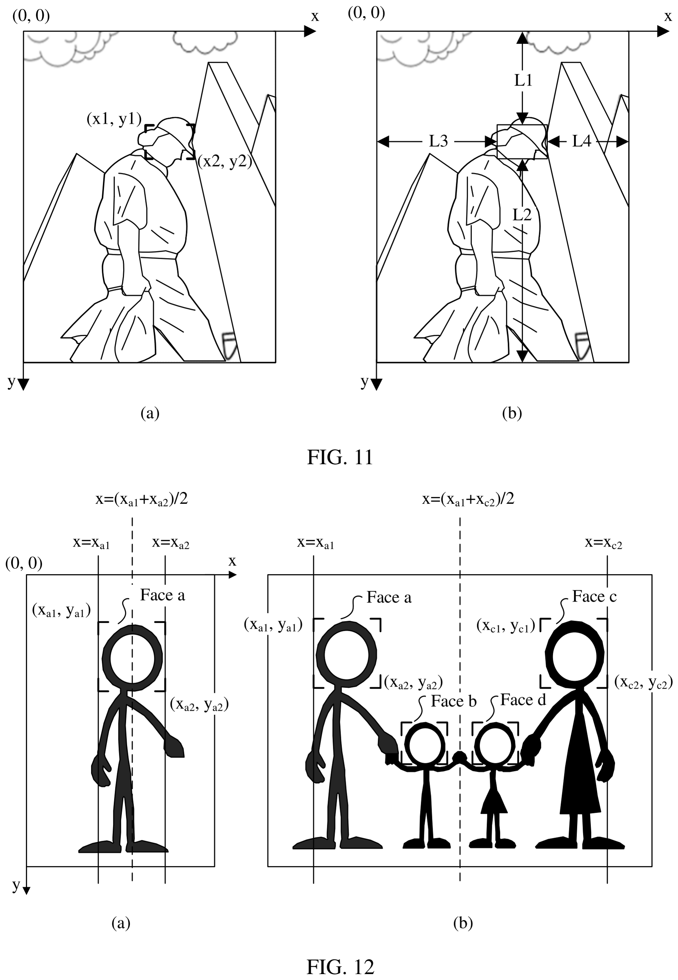

For example, as shown in FIG. 11, a coordinate system in which the coordinates of the vertexes are located uses an upper left corner of a picture as a coordinate origin, a straight line on which a width of the picture is located as an x-axis, and a straight line on which a height of the picture is located as a y-axis. It should be noted that, unless otherwise specified, all coordinates in embodiments of this application use the foregoing coordinate system as a reference coordinate system.

For example, as shown in (a) of FIG. 11, the position information of the face may include coordinates (x1, y1) of an upper-left vertex of and coordinates (x2, y2) of a lower-right vertex that are in the face bounding box, which may be represented as [(x1, y1), (x2, y2)].

In another optional implementation, the position information of the face may include distances between four sides of the face bounding box and corresponding sides of the picture.

For example, as shown in (b) of FIG. 11, the face bounding box includes an upper boundary, a lower boundary, a left boundary, and a right boundary, and the picture includes an upper boundary, a lower boundary, a left boundary, and a right boundary. The position information of the face includes a distance L1 between the upper boundary of the face bounding box and the upper boundary of the picture, a distance L2 between the lower boundary of the face bounding box and the lower boundary of the picture, a distance L3 between the left boundary of the face bounding box and the left boundary of the picture, and a distance L4 between the right boundary of the face bounding box and the right boundary of the picture, which may be represented as [L1, L2, L3, L4].

The following describes, by using an example, a process in which the mobile phone determines the third boundary based on the position information of the leftmost face and determines the fourth boundary based on the position information of the rightmost face.

For example, the position information of the face includes the coordinates of the upper-left vertex and the coordinates of the lower-right vertex of the face bounding box. As shown in (a) of FIG. 12, the first picture includes only a face a, and position information of the face a is [(xₐ₁, yₐ₁), (xₐ₂, yₐ₂)]. In this case, the third boundary is x=xₐ₁, and the fourth boundary is x=xₐ₂. Therefore, a portrait center is x=(x_{d1}+xₐ₂)/2.

For another example, as shown in (b) of FIG. 12, the first picture includes the face a, a face b, a face c, and a face d. The face a is located at a leftmost side of all person images in the first picture, the face c is located at a rightmost side of all the person images in the first picture, the position information of the face a is [(xₐ₁, yₐ₁), (xₐ₂, yₐ₂)], and position information of the face c is [(x_{c1}, y_{c1}), (x_{c2}, y_{c2})]. In this case, the third boundary is x=xₐ₁, and the fourth boundary is x=x_{c2}. Therefore, a portrait center is x=(xₐ₁+x_{c2})/2.

In another optional implementation, the third boundary may be a left boundary of a body bounding box of the leftmost person image, and the fourth boundary may be a right boundary of a body bounding box of the rightmost person image. The mobile phone may determine the third boundary based on the position information of the leftmost person image in the first picture, and determine the fourth boundary based on the position information of the rightmost person image in the first picture. A principle thereof is similar to the foregoing principle of determining the portrait center by using the position information of the face, and details are not described herein again.

In another optional implementation, the mobile phone may determine the third boundary based on a center of gravity of the leftmost person image, and determine the fourth boundary based on a center of gravity of the rightmost person image. Specifically, the third boundary is a straight line that crosses the center of gravity of the leftmost person and that is perpendicular to the x-axis, and the fourth boundary is a straight line that crosses the center of gravity of the rightmost person and that is perpendicular to the x-axis.

In an optional implementation, the mobile phone may detect key points on the person image by using a key point detection algorithm. The key point is, for example, positions of a body such as eyes, a nose, a mouth, a neck, an arm, a knee, or an ankle, and then determine the center of gravity of the person image by using the positions of the key points.

In this embodiment of this application, the portrait's highest point is a highest point among highest points of target portraits among portraits included in the first picture. The position information of the portrait's highest point may include a distance between the portrait's highest point and the upper boundary and/or the lower boundary of the first picture.

In an optional implementation, the target object may be a portrait within a first range of the first picture. Two boundaries of the first range are respectively a first boundary obtained by moving from the portrait center a first distance on the left (which may also be referred to as a first horizontal direction) and a second boundary obtained by moving from the portrait center a second distance on the right (which may also be referred to as a second horizontal direction). Optionally, the first range further includes an upper boundary, a lower boundary, and the like. This is not specifically limited herein.

When the first picture includes only one portrait, the first distance and the second distance may be determined based on a width of a face bounding box. The first distance and the second distance are greater than or equal to a half of the width of the face bounding box, to ensure that the first range can cover the face bounding box. It should be noted that the first distance may be the same as the second distance, or may be different from the second distance.

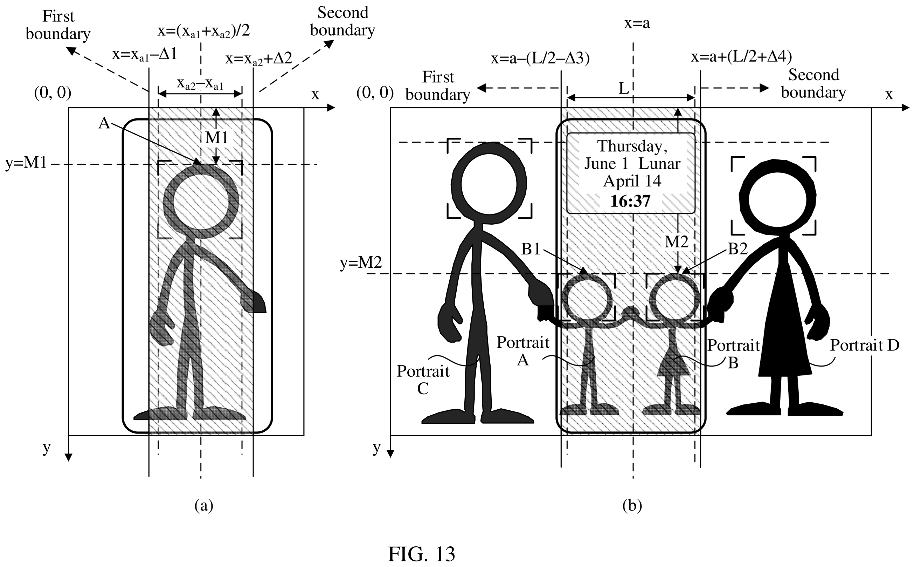

For example, in (a) of FIG. 13, given that position information of a face is [(xₐ₁, yₐ₁), (xₐ₂, yₐ₂)] (not shown in the figure), a width of a face bounding box is xₐ₂-xₐ₁, and a portrait center is x=(xₐ₁+xₐ₂)/2. A first distance may be (xₐ₂-xₐ₁)/2+Δ1, and a second distance may be (xₐ₂-x_{d1})/2+Δ2, where Δ1≥0, and Δ2≥0. Therefore, a first boundary may be x=(xₐ₁+xₐ₂)/2-[(xₐ₂-xₐ₁)/2+Δ1]=xₐ₁-Δ1. A second boundary may be x=(xₐ₁+xₐ₂)/2+[(xₐ₂-xₐ₁)/2+Δ2]=xₐ₂+Δ2, a first range is xₐ₁-Δ1≤x<xₐ₂+Δ2 (that is, a range of a shadow part). In this way, it can be ensured that the first range can cover the face bounding box.

A portrait included in the first range is the target object, and a portrait's highest point is a head top A of the portrait. Therefore, the portrait's highest point is the head top A, and position information of the portrait's highest point may be a distance M1 between the head top A and the upper boundary of the first picture.

When the first picture includes a plurality of portraits, the first distance and the second distance may be determined based on a width of a first control. The first distance and the second distance are greater than or equal to a half of the width of the first control, to ensure that the first range can cover the first control. It should be noted that the first distance may be the same as the second distance, or may be different from the second distance. The first control may be a clock view for displaying time, and the width of the first control is a width of the clock view.

It should be additionally noted that the first control is a control displayed on a lock screen preview interface (which may be also referred to as a first interface), for example, the clock control 508 in FIG. 5A to FIG. 5D. The width of the first control is a width of the first control when a size of the lock screen preview interface is scaled to a preset crop size.

For example, the size of the lock screen preview interface is 800*600, and a width of the first control on the lock screen preview interface is 500. If the preset size is 400*300, the width of the first control is 250.

For example, in (b) of FIG. 13, a width of the first control is L, and a portrait center is x=a. A first distance may be L/2+Δ3, and a second distance may be L/2+Δ4, where Δ3≥0, and Δ4≥0. Therefore, a first boundary may be x=a-(L/2+Δ3)=m1, a second boundary may be x=a+(L/2+Δ4)=m2, and a first range is a region of m1≤x≤m2 (that is, a region of a shadow part). In this way, it can be ensured that the first range can cover the first control.

If the first range includes a portrait A and a portrait B, target objects are the portrait A and the portrait B. A highest point of the portrait A is a head top of the portrait A, that is, a point B1. A highest point of the portrait B is a head top of the portrait B, that is, a point B2. Because the point B1 and the point B2 have a same vertical coordinate, a portrait's highest point is the highest point B1 and the highest point B2 of a person image in the first range, and position information of the portrait's highest point may be a distance M2 between the highest point B1/the highest point B2 and the upper boundary of the first picture.

In an optional implementation, if a vertical coordinate value of the point B1 is less than a vertical coordinate value of the point B2, a highest point among highest points of the target objects is the point B1, so that the portrait's highest point is the point B1. If the vertical coordinate value of the point B1 is greater than the vertical coordinate value of the point B2, a highest point among the highest points of the target objects is the point B2, so that the portrait's highest point is the point B2.

In another implementation, the first range may be another range that can cover the face bounding box or the first control, and a region in which the first range is located may be an open figure, a closed figure, a regular figure, or an irregular figure. This is specifically limited herein.

In another optional implementation, the target objects may be all portraits in the first picture.

For example, in (b) of FIG. 13, the target objects are a portrait C, the portrait A, the portrait B, and a portrait D. A highest point of the portrait C is higher than a highest point of another portrait, so that an object's highest point is the highest point of the portrait C, that is, a head top of the portrait C.

The concept related to the portrait's highest point is explained above, and a process in which the mobile phone determines the portrait's highest point is described in detail below. For details, refer to S410 to S440, and details are not described herein.

S230: Determine a first crop region based on first parameter information and second parameter information.

The second parameter information includes a crop size, and position information of the first control.

The crop size is preset. For example, the crop size may be 2340* 1080 pixels.

In an optional implementation, to avoid distortion during display of a cropped picture, a ratio of a crop size is the same as a ratio of a display screen. For example, a width-to-height ratio is the same as a width-to-height ratio of an inner screen of a device such as a mobile phone with a foldable screen or a bar-type mobile phone. This is not specifically limited herein.

The position information of the first control indicates a position of the first control on an adjusted lock screen preview interface, where the adjusted lock screen preview interface is an interface obtained by adjusting a size of the lock screen preview interface to the crop size. Alternatively, it may be understood that the position information of the first control indicates a position of the first control in a first crop region when the first control is mapped into the first crop region.

For example, the position information of the first control may include the width of the first control, a height of the first control, a distance between an upper boundary of the first control and an upper boundary and/or a lower boundary of the adjusted first interface (or the first crop region), and the like.

For another example, the position information of the first control may be similar to the position information of the face, and may include coordinates of two diagonal vertexes of the first control. In this case, based on the position information of the first control, the mobile phone may calculate the width of the first control, the height of the first control, and the distance between the upper boundary of the first control and the upper boundary and/or the lower boundary of the adjusted first interface.

In this embodiment of this application, the mobile phone may determine a size and a position of the first crop region based on the first parameter information and the second parameter information.

The size of the first crop region is the same as the crop size. For example, if the crop size is 2340* 1080 pixels, the size of the first crop region is also 2340* 1080 pixels. In addition, because the ratio of the crop size is the same as the ratio of the display screen, a ratio of the first crop region is also the same as the ratio of the display screen.

The position of the first crop region indicates a relative position of the first crop region to the first picture. In an optional implementation, the position of the first crop region may include a distance S1 between an upper boundary of the first crop region and the upper boundary of the first picture, a distance S2 between a lower boundary of the first crop region and the lower boundary of the first picture, a distance S3 between a left boundary of the first crop region and a left boundary of the first picture, and a distance S4 between a right boundary of the first crop region and a right boundary of the first picture.

In this embodiment of this application, the mobile phone may determine a position of the crop region in an x-axis direction and a position of the crop region in a y-axis direction, respectively.

In the y-axis direction, a distance between the portrait's highest point and a first side of the first crop region satisfies a first condition. In the x-axis direction, a distance between the portrait's highest point and a second side of the first crop region satisfies a second condition, so that when a second picture obtained through cropping based on the first crop region is displayed, a portrait included in the second picture obscures part of a region of the first control.

The first side may be the upper boundary of the first crop region or the lower boundary of the first crop region.

When the first side is the upper boundary of the first crop region, the first condition includes: A distance between the portrait's highest point and the first side of the first crop region is less than a distance between the lower boundary of the first control and the first side of the first crop region. Optionally, the distance between the portrait's highest point and the first side of the first crop region is greater than the distance between the upper boundary of the first control and the first side of the first crop region.

When the first side is the lower boundary of the first crop region, the first condition includes: A distance between the portrait's highest point and the first side of the first crop region is greater than a distance between the lower boundary of the first control and the first side of the first crop region. Optionally, the distance between the portrait's highest point and the first side of the first crop region is less than the distance between the upper boundary of the first control and the first side of the first crop region.

When a ratio of the distance between the portrait's highest point and the lower boundary of the first control to the height of the first control is k, and 0<k<1, the distance between the portrait's highest point and the first side of the first crop region satisfies the first condition. Therefore, the mobile phone determines the distance S1 and the distance S2 based on k, the height of the first picture, the height of the first crop region, the height of the first control, and the distance between the upper boundary of the first control and the upper boundary/the lower boundary of the first crop region.

In this way, the portrait's highest point is located in a region of the first control in the y-axis direction, to allow the mobile phone to adjust positions of the first control and the portrait in the first picture to achieve a depth effect.

The second side is the left boundary of the first crop region or the right boundary of the first crop region, and the second condition includes: A distance between the portrait's highest point and the second side of the first crop region is the same as a distance between a center line of the first control and the second side of the first crop region.

In this embodiment of this application, in the x-axis direction, the mobile phone may use a portrait center of the first picture as an axis of symmetry of the first crop region, where the axis of symmetry of the first crop region coincides with an axis of symmetry of the first control, and determine the distance S3 and the distance S4 with reference to the width of the first picture and a width of the first crop region. In this way, when the display screen displays content (that is, the second picture) included in the first crop region, persons in the picture can be evenly distributed on the display screen, to make an image more harmonious.

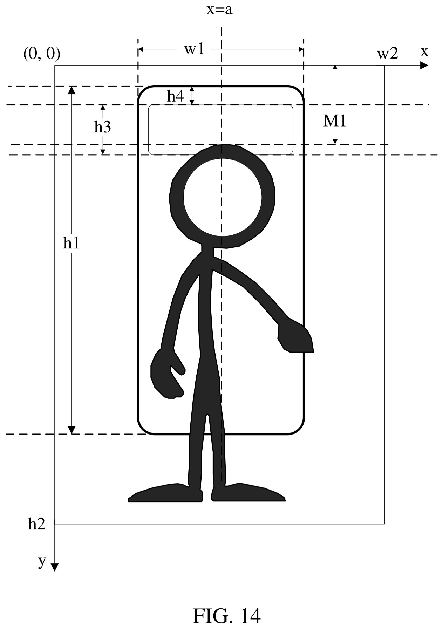

For example, the first parameter information and the second parameter information may be shown in FIG. 14. The crop size is w1*h1, the height of the first control is h3, the distance between the upper boundary of the first control and the upper boundary of the first crop region is h4, a size of the first picture is w2*h2, a distance between the portrait's highest point and an upper top side of the first picture is M1, and the portrait center is x=a.

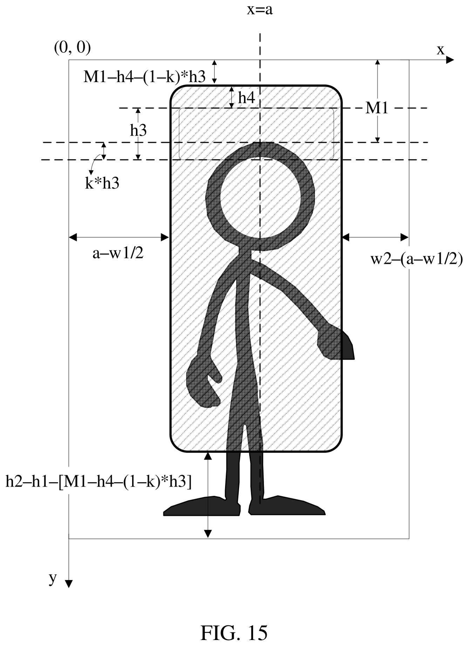

The mobile phone may determine the first crop region based on the first parameter information and the second parameter information that are shown in FIG. 14. The first crop region may be a shadow region shown in FIG. 15.

In the x-axis direction, the mobile phone may determine, based on that the portrait center of the first picture is the axis of symmetry of the first crop region, the axis of symmetry of the first crop region coincides with the axis of symmetry of the first control, a width of the first crop region is w1, and a width of the first picture is w2, that S3=a-w1/2 and S4=w2-(a-w1/2).

In the y-axis direction, the mobile phone may determine that a distance between the portrait's highest point and the lower boundary of the first control is k*h3, so that a distance between the portrait's highest point and the upper boundary of the first control is(1-k)*h3. Based on this, the mobile phone may determine: S1=M1-h4-(1-k)*h3, and S2=h2-h1-S1=h2-h1-(M1-h4-(1-k)*h3).

S240: Crop the first picture based on the first crop region if the first crop region satisfies the first preset condition, to obtain the second picture.

The first preset condition is used for predetermining whether the second picture can be displayed with a depth effect.

In an optional implementation, the first preset condition includes at least two:
(1) The first crop region does not exceed a region in which the first picture is located.

In an optional implementation, the mobile phone may determine whether four vertexes in the first crop region are all located in the region in which the first picture is located. If the four vertexes in the first crop region are all located in the region in which the first picture is located, it indicates that the first crop region does not exceed the region in which the first picture is located. In this case, the mobile phone may crop the first picture based on the first crop region.

If any vertex is not located in the region in which the first picture is located, it indicates that the first crop region exceeds the region in which the first picture is located. In this case, because the first picture cannot satisfy the first crop region, the mobile phone may not crop the first picture based on the first crop region.

(2) An area ratio of a portrait in the first crop region is within a first preset range.

In this embodiment of this application, the area ratio of the portrait may be a ratio of an area of a person in the first crop region to an area of the first crop region. Optionally, the mobile phone may perform body identification on the first crop region to obtain a body bounding box, and calculate an area of the body bounding box. Then, the area of the body bounding box is used as the area of the person in the first crop region, and the area ratio of the portrait is calculated with reference to the area of the first crop region.

The first preset range may be a range determined by a first threshold and a second threshold, and the first threshold is less than the second threshold. For example, the first threshold may be 3%, and the second threshold may be 18%, that is, the first preset range is 3% to 18%. In another implementation, the preset range may alternatively be another range. This is not specifically limited herein. In an optional implementation, the first preset range may be associated with a quantity of portraits in the first picture. For example, when the first picture includes one portrait, the first preset range may be 3% to 18%. When the first picture includes a plurality of portraits, the first preset range may be 2% to 9%.

If the area ratio of the portrait is within the first preset range, it indicates that a size of the person in the first crop region is proper, a good display effect can be achieved when the portrait is displayed with a depth effect, and the mobile phone may crop the first picture based on the first crop region.

If the area ratio of the portrait is not within the first preset range, it indicates that the person in the first crop region is excessively large or excessively small, there is a poor display effect when the portrait is displayed with a depth effect, and it is not recommended to display the portrait with the depth effect. Therefore, the mobile phone may not crop the first picture based on the first crop region.

If the first crop region does not satisfy any of the foregoing conditions (1) and (2), it indicates that the first crop region does not satisfy the first preset condition, and the mobile phone may crop the first picture based on the foregoing first crop region or in another manner, and display a picture obtained through cropping without the depth effect, or the mobile phone may directly display the first picture without the depth effect.

S250: Display the second picture with the depth effect.

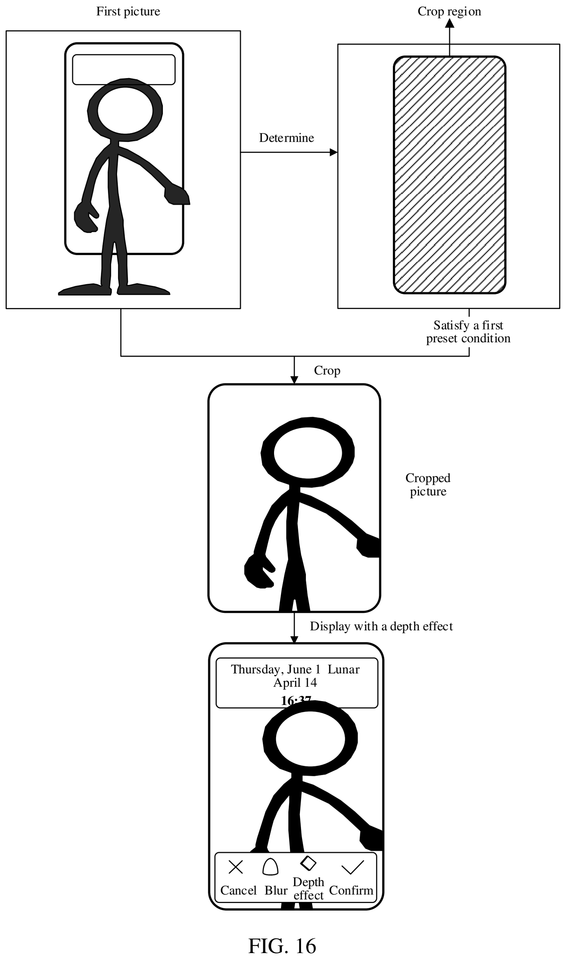

For example, as shown in FIG. 16, the mobile phone may determine the first crop region in the first picture, and if the first crop region satisfies the first preset condition, crop the first picture based on the first crop region, to obtain the second picture. In this way, when the second picture is displayed, the second picture, the first control, and an image matting result of the second picture may be superimposed, so that the image matting result (that is, a portrait part of the second picture) may obscure part of a region of the first control, to create a depth effect.

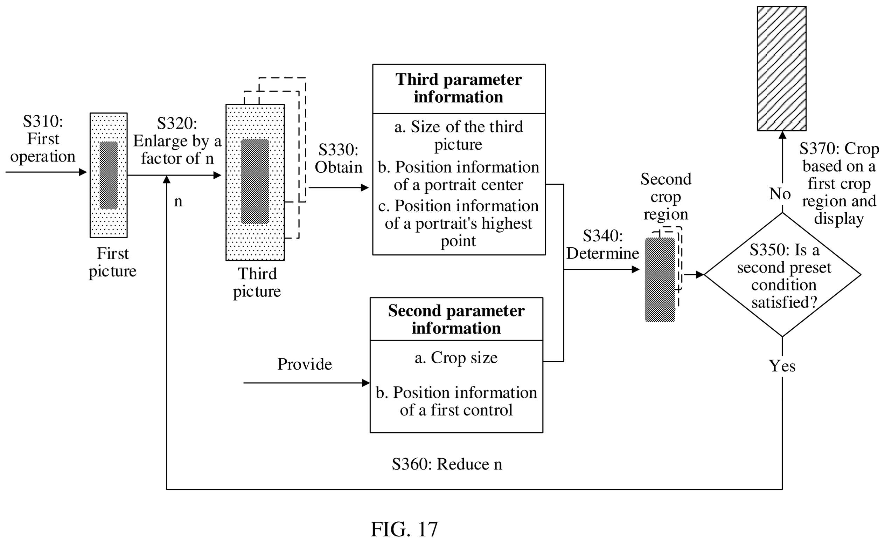

In an optional implementation, to obtain a better display effect, the mobile phone may enlarge the first picture into a plurality of third pictures, and obtain a second crop region corresponding to each third picture. Then, the mobile phone may select an optimal crop region from a plurality of second crop region as the first crop region, crop a third picture corresponding to the first crop region base on the first crop region to obtain the second picture, and display the second picture with the depth effect. The implementation is described below with reference to FIG. 17.

FIG. 17 is a schematic flowchart of another wallpaper setting method according to an embodiment of this application. The wallpaper setting method provided in this embodiment of this application is similar to the process of the wallpaper setting method shown in FIG. 10. As shown in FIG. 17, the wallpaper setting method may include S310 to S370.

S310: Receive a user's first operation of setting a first picture as wallpaper.

For descriptions of the first operation, refer to S210, and details are not described herein again.

S320: Enlarge a size of the first picture by a factor of n, to obtain a third picture.

n is an adjustment factor, and nₘᵢₙ≤n≤nₘₐₓ. nₘₐₓ is a maximum value of the adjustment factor n prestored in the mobile phone, which may be, for example, 2, 3, 3.5, or 4. nₘᵢₙ is a minimum value of the adjustment factor n prestored in the mobile phone, which may be, for example, 1.

In an optional implementation, in response to the first operation, the mobile phone may obtain the maximum value nₘₐₓ of the adjustment factor n and enlarge the size of the first picture by a factor of nₘₐₓ, to obtain the third picture.

In an optional implementation, the mobile phone may enlarge the first picture by using a coordinate origin (for example, an upper-left vertex of the first picture) as an anchor point. In this way, pictures before and after enlarging may have a same coordinate system, to facilitate calculation.

For example, if the size of the first picture is w1*h1, a distance between a portrait's highest point in the first picture and an upper boundary of the third picture is M1, and a portrait center of the first picture is x=a, a size of the third picture is (n*w1)*(n*h1), a distance between a portrait's highest point in the third picture and an upper boundary of the third picture is n*M1, and a portrait center of the third picture is x=n*a.

S330: Obtain third parameter information of the third picture.

The third parameter information includes the size of the third picture, position information of an object's highest point in the third picture, and position information of an object center in the third picture.

For a process of obtaining the third parameter information of the third picture, refer to S220 and S410 to S440, and details are not described herein again.

In an optional implementation, if the first picture and the third picture include only one portrait, the mobile phone may determine the third parameter information with reference to first parameter information, second parameter information, and the adjustment factor n. For example, if a size of the first picture is w*h, a portrait center of the first picture is x=a, a distance between the portrait's highest point and an upper top side of the first picture is m, and the third picture is n times of the first picture, the size of the third picture is nw*nh, a portrait center of the third picture is x=na, and a distance between the portrait's highest point and the upper top side of the third picture is n*m.

S340: Determine the second crop region in the third picture based on the third parameter information and the second parameter information.

A size of the second crop region is the same as a crop size.

In this embodiment of this application, the mobile phone may determine a position of the second crop region in the third picture based on the size of the third picture, the distance between the portrait's highest point in the third picture and the upper boundary of the third picture, the position of the portrait center, and the second parameter information.

A process of determining the position of the second crop region is similar to the process of determining the first crop region in S230, and details are not described herein again.

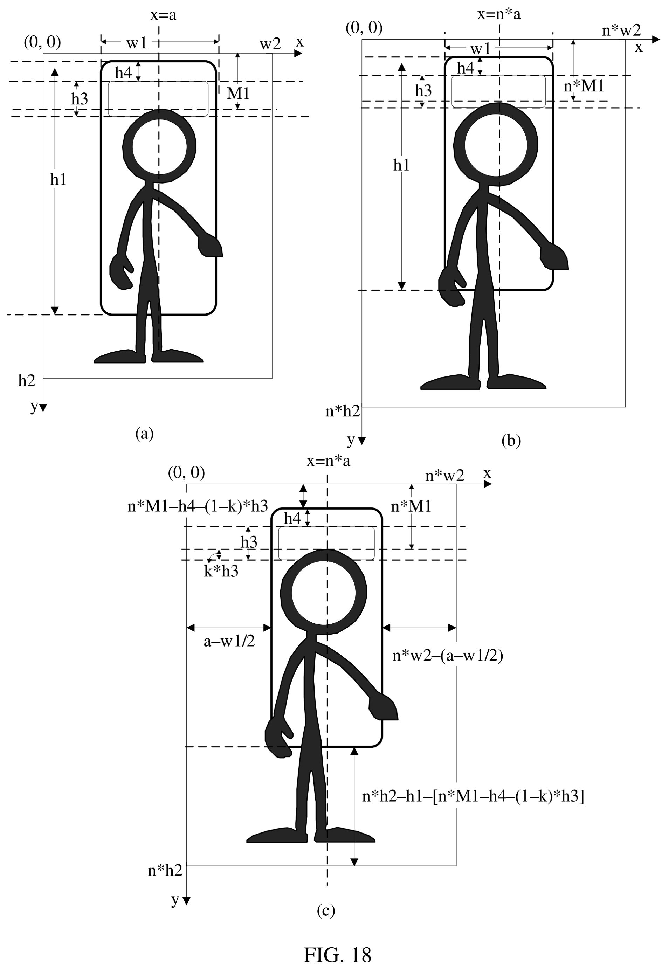

For example, the first parameter information and the second parameter information may be shown in (a) of FIG. 18. A size of the display screen is w1*h1, a height of a first control is h3, a distance between an upper boundary of the first control and an upper boundary of the crop region is h4, the size of the first picture is w2*h2, a distance between the portrait's highest point and the upper top side of the first picture is M1, and the portrait center is x=a.

The third picture is obtained by enlarging the first picture by a factor of n. As shown in (b) of FIG. 18, a size of the third picture is (n*w2)*(n*h2), a distance between the portrait's highest point in the third picture and the upper boundary of the third picture is n*M1, and the portrait center in the third picture is x=n*a.

A position of the second crop region shown in (c) of FIG. 18 may be obtained based on the parameter information shown in (b) of FIG. 18.

In an x-axis direction, it may be determined, based on that the mobile phone uses the portrait center of the third picture as an axis of symmetry of the second crop region, an axis of symmetry of the second crop region coincides with an axis of symmetry of the first control, a width of the display screen is w1, and a width of the third picture is w2, that S3=n*a-w1/2, and S4=n*w2-(n*a-w1/2).

In the y-axis direction, the mobile phone may determine that a distance between the portrait's highest point and the lower boundary of the first control is k*h3, so that a distance between the portrait's highest point and the upper boundary of the first control is(1-k)*h3. Based on this, the mobile phone may determine that S1=n*M1-h4-(1-k)*h3, S2=n*h2-h1-S1=n*h2-h1-[n*M1-h4-(1-k)*h3].

S350: Determine whether the second crop region satisfies a second preset condition.

The second preset condition is used to determine whether content in the second crop region supports a depth effect, and determine whether the mobile phone needs to continue to determine a new second crop region. In an optional implementation, the second preset condition includes:
(1) The second crop region does not extend a region in which the third picture is located. (2) An area ratio of a portrait in the second crop region is greater than or equal to a first threshold, where the first threshold is a minimum value of the area ratio of the portrait.

When the second crop region extends beyond the region in which the third picture is located, if an adjustment factor n is further reduced, a new second crop region obtained based on an adjusted adjustment factor n still extends beyond a region in which the first picture is located.

When the area ratio of the portrait in the crop region is less than the first threshold, if the adjustment factor n is further reduced, an area ratio of the portrait in the new second crop region is reduced, that is, the area ratio is still less than the first threshold, affecting a display effect.

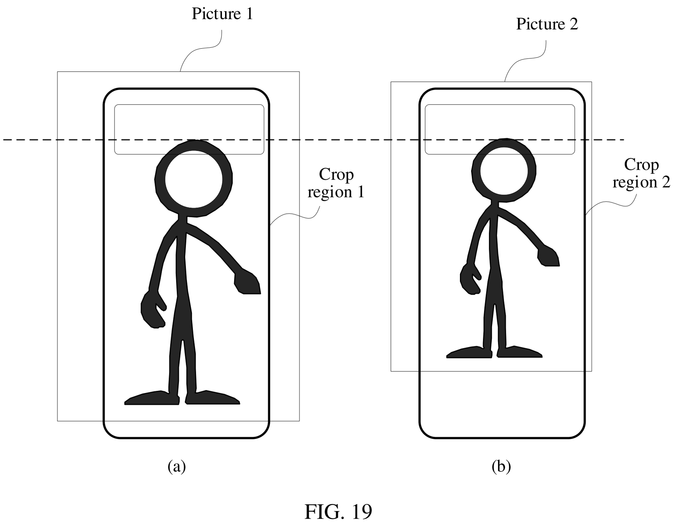

For example, as shown in (a) of FIG. 19, a picture 1 is a picture obtained by enlarging the first picture by a factor of n1, and a crop region 1 is a second crop region corresponding to the picture 1. As shown in (b) of FIG. 19, a picture 2 is a picture obtained by enlarging the first picture by a factor of n2, a crop region 2 is a second crop region corresponding to the picture 2, and n1>n2. A dashed line is a straight line on which a portrait's highest point in the picture 1 and a portrait's highest point in the picture 2 are located.

In a case in which the crop region 1 extends a region in which the picture 1 is located, the crop region 2 inevitably also extends a region in which the picture 2 is located. In a case in which an area ratio of a portrait in the crop region 1 is less than the first threshold, an area ratio of a portrait in the crop region 2 is inevitably less than the first threshold. In other words, if it is determined that the crop region 1 does not satisfy the second preset condition, the adjustment factor n does not need to be further reduced.

S350 is performed if the second crop region satisfies the second preset condition. S360 is performed if the second crop region does not satisfy the second preset condition.

S360: Reduce n.

In an optional implementation, the mobile phone may determine whether n is greater than a minimum adjustment factor nₘᵢₙ, reduce n when n>nₘᵢₙ, and when n≤nₘᵢₙ, directly perform S360 without reducing n.

The mobile phone may reduce the adjustment factor n based on a preset step. For example, the preset step may be 0.1 or 0.2.

For example, if n1=3, and the preset step is 0.1, n may be sequentially 2.9, 2.8, 2.7, ..., and 1.

In another optional implementation, an initial value of the adjustment factor n may alternatively be a minimum value (that is, 1). In addition, the second preset condition is adjusted to: (1) The second crop region does not extend the region in which the third picture is located. (2) The area ratio of the portrait in the second crop region is greater than a second threshold, and the second threshold is a maximum value of the area ratio of the portrait. In addition, S350 may be replaced with: n is increased.

In this embodiment of this application, based on S320 to S350, the mobile phone may obtain at least one third picture and a second crop region corresponding to each third picture. An adjustment factor n corresponding to each third picture is different.

For example, the at least one third picture includes a picture 1, a picture 2, a picture 3, ..., and a picture m, where the picture 1 is a picture that is obtained after the first picture is enlarged by a factor of A1, the picture 2 is a picture that is obtained after the first picture is enlarged by a factor of A2, the picture 3 is a picture that is obtained after the first picture is enlarged by a factor of A3, ..., and the picture n is a picture that is obtained after the first picture is enlarged by a factor of Am.

In addition, the mobile phone may further determine a second crop region 1 corresponding to the picture 1, a second crop region 2 corresponding to the picture 2, a second crop region 3 corresponding to the picture 3, ..., and a second crop region m corresponding to the picture m.

S370: Crop a corresponding third picture based on the first crop region and display.

The first crop region is a crop region that is in all second crop regions and that satisfies at most a third preset condition.

In this embodiment of this application, the third preset condition is a condition for predetermining a display effect of a cropped picture.

In this embodiment of this application, the third preset condition may include:
Condition A: When the first picture includes two portraits, the second crop region also includes the two portraits.

In an optional implementation, when the first picture includes the two portraits, the mobile phone may determine face positions of the two portraits, and the mobile phone may determine whether the face positions of the two portraits are located in the second crop region.

If two faces are both located in the first crop region, it indicates that the first crop region includes the two portraits. In this way, a portrait of a picture obtained through cropping based on the second crop region is evenly distributed, and a display effect is good.

If a face position of at least one portrait is not located in the second crop region, it indicates that the second crop region does not include the two portraits. In this way, a picture obtained through cropping based on the second crop region does not include the two portraits, and a cropping effect is poor.

Condition B: When the first picture includes only one portrait, a body is not clipped in a crop region.

Condition C: A composition index of a crop region is greater than a first value. The composition index is used for reflecting a composition effect of a picture, and a higher composition index indicates a better composition effect of the picture.

It should be noted the foregoing third preset condition is merely an example, and the third preset condition may alternatively be another condition for predetermining a display effect of a cropped picture.

For example, the mobile phone obtains the picture 1, the picture 2, and the picture 3 based on S320 to S350, and determines that a second crop region of the picture 1 is the crop region 1, a second crop region of the picture 2 is the crop region 2, and a second crop region of the picture 3 is the crop region 3.

If the crop region 1 and the crop region 3 satisfy the foregoing condition C, and the crop region 3 satisfies the foregoing condition A and condition C, the crop region 2 is a second crop region that satisfies at most the third preset condition. The mobile phone may use the crop region 2 as the first crop region, crop a third picture corresponding to the crop region 2 based on the first crop region, to obtain the second picture, and display the second picture with a depth effect.

In an optional implementation, if there are a plurality of second crop regions that satisfy a same quantity of third preset conditions, and the quantity is the largest, the mobile phone may use a second crop region with a maximum adjustment factor among the plurality of second crop regions as the first crop region. In this way, a finally obtained portrait in the second picture may be a largest portrait in all pictures supporting the depth effect, and a display effect is better.

In an optional implementation, before performing S320, the mobile phone may first determine a third crop region (that is, a second crop region when n=1) in the first picture based on the first parameter information and the second parameter information. If an area ratio of a portrait in the third crop region is less than or equal to the second threshold, the size of the first picture is enlarged by a factor of n, to obtain the third picture.

If an area ratio of a portrait in the third crop region is greater than the second threshold, it indicates that a crop region with a minimum area ratio of the portrait cannot achieve a good display effect. With an operation of enlarging the first picture, an area ratio of a portrait in the second crop region is larger, and a good display effect cannot be achieved. Therefore, if the area ratio of the portrait in the third crop region is greater than the second threshold, S340 may not be performed, but the first picture is directly cropped, and the cropped picture is displayed without the depth effect, or the mobile phone may directly display the first picture without the depth effect.

In another optional implementation, the mobile phone may obtain all values of the adjustment factor n, and separately enlarge the first picture according to all values of the adjustment factor n, to obtain a corresponding third picture. Then, the mobile phone may obtain a second crop region corresponding to each third picture and determine the first crop region among all the second crop regions. Then, the corresponding third picture is cropped based on the first crop region and displayed.

By comparing the flowchart in FIG. 10 with the flowchart in FIG. 17, depth effect wallpaper setting may be implemented in the flowcharts provided in FIG. 10 and FIG. 17. However, effects achieved by using the two flowcharts are different. The flowchart provided in FIG. 10 is simpler, includes less calculation, and can save computing resources of a device. In the flowchart provided in FIG. 17, a plurality of crop regions may be obtained, and then an optimal crop region is selected from the plurality of crop regions for cropping, to obtain a better display effect.

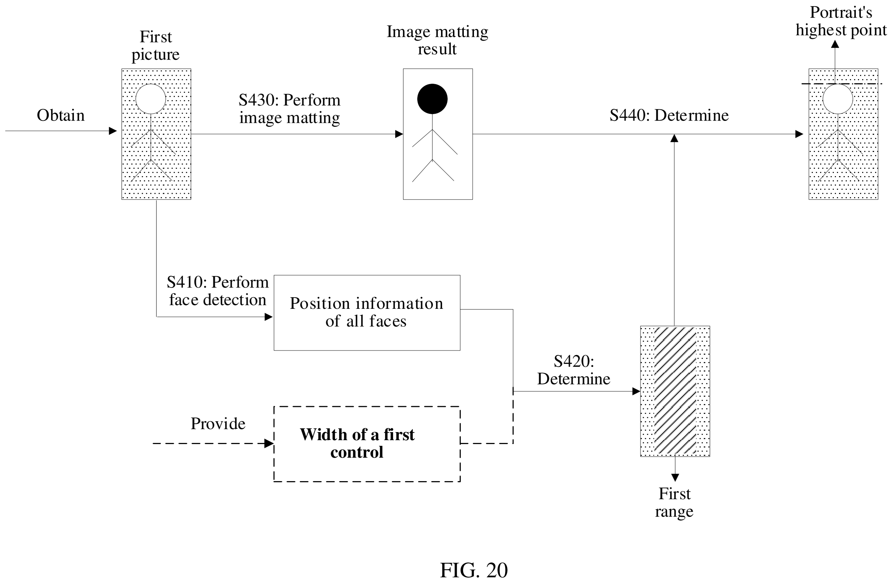

FIG. 20 is a method for determining an object's highest point according to an embodiment of this application. The method specifically describes the process of determining position information of the portrait's highest point. As shown in FIG. 20, the method includes S410 to S440.

S410: Perform face detection on a first picture, to determine position information of all faces.

In this embodiment of this application, a mobile phone may perform face detection on an original picture by using a face detection module of an application framework layer, to recognize all faces in the first picture and position information of each face.

The face detection module may be implemented by using a face recognition algorithm such as a recognition algorithm based on feature points on a face, a recognition algorithm based on an entire face image, a recognition algorithm based on a template, or an algorithm that performs recognition by using a neural network. This is not specifically limited herein.

S420: Determine a first range.

In this embodiment of this application, the mobile phone moves from a portrait center a first distance on the left to obtain a third boundary, and moves from the portrait center a second distance on the right to obtain a fourth boundary, and determines the first range based on the third boundary and the fourth boundary.

If the first picture includes only one portrait, the mobile phone may determine the first distance and the second distance based on a width of a face bounding box. The first distance and the second distance are greater than or equal to a half of the width of the face bounding box. For details, refer to the related descriptions of S220, and details are not described herein again.

If the first picture includes a plurality of portraits, the mobile phone may determine the first distance and the second distance based on a width of the first control. The first distance and the second distance are greater than or equal to a half of the width of the first control.

S430: Perform image matting on the first picture, to obtain an image matting result.

The image matting result is a result of foreground and non-foreground separation of the first picture. In an optional implementation, the image matting result may also be referred to as a fourth picture.

In this embodiment of this application, the image matting result includes a first-type pixel and a second-type pixel. The first-type pixel is a pixel that is in the first picture and that belongs to the foreground, and the second-type pixel is a pixel other than the foreground in the first picture.

For example, the image matting result may be a grayscale image, and a grayscale value of each pixel indicates that each pixel of the first picture belongs to a foreground object or does not belong to foreground. For example, if a pixel value of a pixel is 0 (that is, the pixel is black), it may indicate that the pixel belongs to the foreground of the first picture, and if a pixel value of a pixel is 0 (that is, the pixel is white), it indicates that the pixel does not belong to the foreground of the first picture.

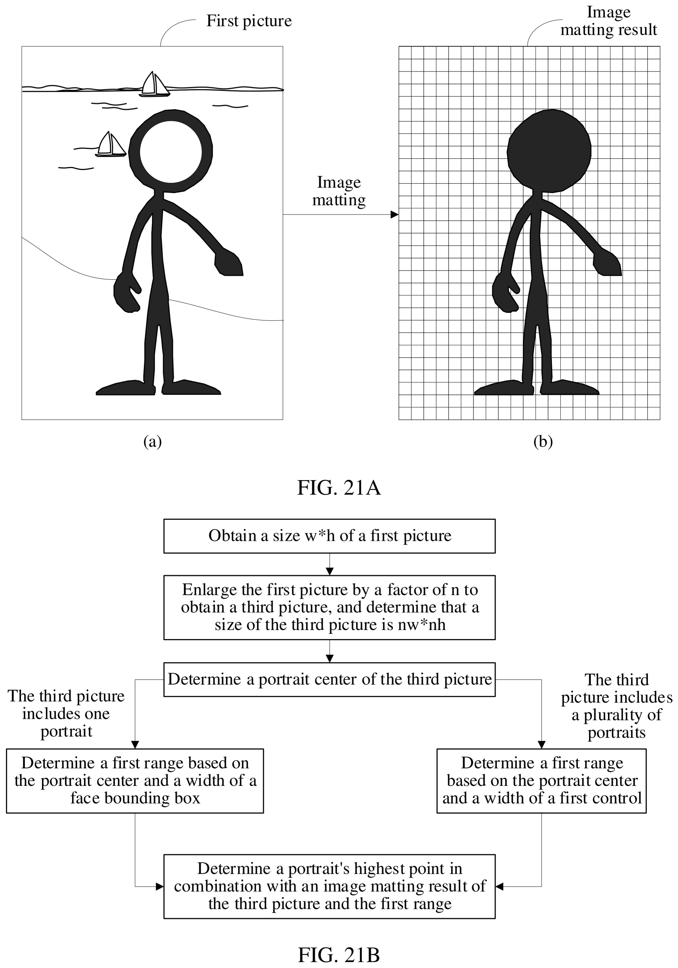

For example, an image matting result shown in (b) of FIG. 21A may be obtained by performing image matting on a first picture shown in (a) of FIG. 21A. A foreground part is black, and a non-foreground part is white.

S440: Determine a portrait's highest point based on the first range and the image matting result.

In this embodiment of this application, an electronic device may determine position information of a target pixel in the image matting result, and use the position information of the target pixel as position information of the object's highest point.

In an optional implementation, the target pixel is a highest point of all first-type pixels of the image matting result.

In another optional implementation, the target pixel is a highest point of all the first-type pixels within the first range of the image matting result. The first range is related to a quantity of portraits included in the first picture. For details, refer to the content about the portrait's highest point in S220, and details are not described herein again.

It should be noted that in a process in which the electronic device performs S310 to S360, the electronic device needs to determine the portrait's highest point in the third picture. For a process of determining the portrait's highest point in the third picture, refer to S410 to S440.

For example, as shown in FIG. 21B, the electronic device may obtain a size w*h of the first picture, then enlarge the first picture by a factor of n to obtain the third picture, and determine that a size of the third picture is nw*nh. Then, the electronic device may determine a portrait center of the third picture. If the third picture includes only one portrait, the electronic device may determine the first range based on the portrait center and a width of a face bounding box, and then determine the portrait's highest point with reference to an image matting result of the third picture and the first range. If the third picture includes a plurality of portraits, the electronic device may determine the first range based on the portrait center and the width of the first control, and then determine the portrait's highest point with reference to the image matting result of the third picture and the first range.

The wallpaper setting method provided in embodiments of this application is described below with reference to the layered architecture shown in FIG. 4.

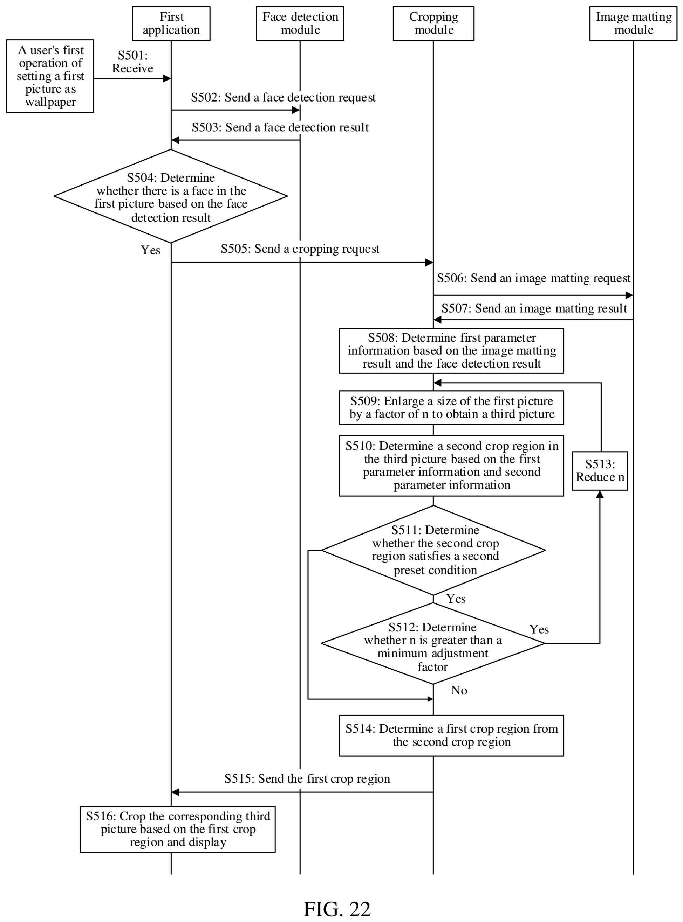

FIG. 22 is a schematic flowchart of still another wallpaper setting method according to an embodiment of this application. As shown in FIG. 22, the wallpaper setting method may include S501 to S516.

S501: A first application receives a user's first operation of setting a first picture as wallpaper.

For example, the first application may be a gallery application, or another application with a wallpaper setting function.

S502: The first application sends a face detection request to a face detection module.

The face detection request carries data of the first picture.

In an optional implementation, the first application may send a face detection request to the face detection module via a face detection interface.

S503: The face detection module sends a face detection result to the first application.

The face detection result includes position information of all faces in the first picture.

S504: The first application determines whether there is a face in the first picture based on the face detection result.

S505 is performed if there is a face in the first picture. If there is no face in the first picture, the first application may preview the first picture without a depth effect.

S505: The first application sends a cropping request to a cropping module.

The cropping request may carry the face detection result and the data of the first picture.

In an optional implementation, the first application may send the cropping request to the cropping module via a cropping interface.

S506: The cropping module sends an image matting request to an image matting module.

The image matting request carries the data of the first picture.

S507: The image matting module sends an image matting result to the cropping module.

S508: The cropping module determines first parameter information based on the image matting result and the face detection result.

For descriptions of the first parameter information, refer to S220, and details are not described herein again.

S509: The cropping module enlarges a size of the first picture by a factor of n, to obtain a third picture.

S510: The cropping module determines a second crop region in the third picture based on the first parameter information and the second parameter information.

S511: The cropping module determines whether the second crop region satisfies a second preset condition.

S512 is performed if the second crop region satisfies the second preset condition. S514 is performed if the second crop region does not satisfy the second preset condition.

S512: Determine whether n is greater than a minimum adjustment factor.

The minimum adjustment factor is a minimum value nₘᵢₙ of an adjustment factor n.

If n>nₘᵢₙ, 513 is performed. If n≤nₘᵢₙ, S514 is performed.

S513: The cropping module reduces n.

S514: The cropping module determines a first crop region from the second crop region.

S515: The cropping module sends the first crop region to the first application.

S516: The first application crops the corresponding third picture based on the first crop region and display.

In conclusion, according to the wallpaper setting method provided in embodiments of this application, a photograph captured by a user or a picture downloaded by the user is cropped, so that the picture can be displayed with a depth effect, and a personalized requirement of the user can be met when depth effect wallpaper is used.

In an optional implementation, the face detection module may perform face detection on all pictures in the gallery application within a preset time period (for example, user's sleeping time such as 12:00 a.m. to 3:00 a.m.), to obtain the face detection result. In this way, when the first application receives the user's first operation of setting the first picture as the wallpaper, the first application may directly obtain the face detection result of the first picture from the face detection module, and the face detection module does not need to perform detection temporarily, thereby shortening time consumed for face detection, and enabling a process of setting the depth effect wallpaper by the user to be smoother.

In an optional implementation, the image matting result may perform image matting processing on all the pictures in the gallery application within a preset time period (for example, user's sleeping time such as 12:00 a.m. to 3:00 a.m.), to obtain the image matting result. In this way, after receiving the cropping request, the cropping module can directly obtain the image matting result of the first picture from the image matting module, and the image matting result does not need to perform image matting operation temporarily, thereby shortening time consumed for the image matting operation, and enabling the process of setting the depth effect wallpaper by the user to be smoother.

It should be noted the foregoing embodiments describe a specific procedure in a case in which an object is a portrait. A portrait's highest point is an object's highest point, a portrait center is an object center, and an area ratio of the portrait is an area ratio of the object.

The foregoing embodiments may alternatively be applied to a case in which the object is another object such as an animal, scenery, or a fruit. A difference lies in that, when the object is another object such as an animal, scenery, or a fruit, object recognition algorithms used by the electronic device are different. For example, when the object is an animal, the animal in a picture may be recognized by using an animal recognition algorithm. In other words, the picture may be recognized by using an algorithm corresponding to the recognized object.

In addition, when the object is not a portrait, a third boundary may be a left boundary of a leftmost object in the first picture, and a fourth boundary is a right boundary of a rightmost object in the first picture. The left boundary of the leftmost object may be a straight line that runs through a leftmost pixel of the leftmost object and that is perpendicular to an x-axis, and the right boundary of the rightmost object may be a straight line that runs through a rightmost pixel of the rightmost object and that is perpendicular to the x-axis.

Moreover, if the first picture includes one object, a first distance and a second distance are greater than or equal to a half of a width of the object. The width of the object may be a distance between a leftmost pixel of the object and a rightmost pixel of the object.

An embodiment of this application further provides a chip system. The chip system includes at least one processor and at least one interface circuit. The processor is connected to the interface circuit through a line. For example, the interface circuit may be configured to receive a signal from another apparatus (for example, a memory of an electronic device). For another example, the interface circuit may be configured to send a signal to another apparatus (for example, the processor). For example, the interface circuit may read instructions stored in the memory and send the instructions to the processor. When the instructions are executed by the processor, the electronic device or a server is enabled to perform steps in the foregoing embodiments. It is clear that the chip system may further include another discrete device. This is not specifically limited in this embodiment of this application.

An embodiment of this application further provides a computer-readable storage medium. The computer-readable storage medium stores computer instructions, and when the computer instructions are run on an electronic device, the electronic device is enabled to perform the functions or steps in the foregoing method embodiments.

An embodiment of this application further provides a computer program product. When the computer program product is run on an electronic device, the electronic device is enabled to perform the functions or steps in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the functions or steps performed by the mobile phone in the foregoing method embodiments.

The electronic device, the communication system, the computer-readable storage medium, the computer program product, or the chip provided in embodiments may be configured to perform the corresponding method provided above. Therefore, for beneficial effects that can be achieved, refer to the beneficial effects of the corresponding method provided above. Details are not described herein again.

Through the foregoing descriptions of the implementations, a person skilled in the art may clearly understand that, for the purpose of convenient and brief description, division into the foregoing functional modules is merely used as an example for description. During actual application, the foregoing functions may be allocated to different functional modules and implemented based on a requirement. That is, an inner structure of an apparatus is divided into different functional modules, to implement a part or all of the functions described above.

In the several embodiments provided in this application, it should be understood that the disclosed system, apparatus, and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may be one or more physical units, to be specific, may be located in one place, or may be distributed in a plurality of different places. Some or all of the units may be selected according to actual needs to achieve the objectives of the solutions of embodiments.

In addition, functional units in embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the preferred embodiments, a person of ordinary skill in the art should understand that modifications or equivalent replacements may be made to the technical solutions of this application, without departing from the spirit and scope of the technical solutions of this application.

## Claims

1. A wallpaper setting method, applied to an electronic device comprising a display screen, wherein the method comprises:
receiving a user's first operation of setting a first picture as wallpaper, wherein foreground of the first picture comprises one or more objects;
displaying a first interface in response to the first operation, wherein the first interface comprises a second picture and a first control, an object in the second picture obscures part of a region of the first control, the second picture is obtained by cropping the first picture based on a target point in the first picture, the target point is a highest point among candidate points in the first picture, and the candidate point is a highest point of the one or more objects.

2. The method according to claim 1, wherein the method further comprises:
obtaining position information of a first-type pixel in the first image, wherein the first-type pixel is a pixel that is in the first picture and that belongs to the foreground; and
determining the target point in the first picture based on the position information of the first-type pixel.

3. The method according to claim 2, wherein the obtaining position information of a first-type pixel in the first image comprises:
performing image matting on the first picture, to obtain an image matting result, wherein the image matting is for separating the foreground from non-foreground in the first picture, and the image matting result comprises the first-type pixel; and
obtaining the position information of the first-type pixel in the first image based on the image matting result.

4. The method according to claim 1, wherein the candidate point is a highest point of a target object among the one or more objects, and the target object is an object within a first range of the first picture.

5. The method according to claim 4, wherein the method further comprises:
determining an object center of the first picture, wherein the object center reflects a center of the one or more objects in a horizontal direction; and
moving from the object center a first distance in a first horizontal direction to obtain a first boundary of the first range, and moving from the object center the first distance in a second horizontal direction to obtain a second boundary of the first range, wherein the first horizontal direction is opposite to the second horizontal direction.

6. The method according to claim 5, wherein
the foreground comprises one object, and a distance between the first boundary and the second boundary is greater than or equal to a width of a key region of the object; or
the foreground comprises a plurality of objects, and a distance between the first boundary and the second boundary is greater than or equal to a width of the first control.

7. The method according to claim 6, wherein the object is a person image, and the key region of the object is a face region of the person object.

8. The method according to any one of claims 5 to 7, wherein the object center is an axis of symmetry between a third boundary perpendicular to a first direction and a fourth boundary perpendicular to the first direction, position information of the object center is a coordinate of the axis of symmetry in the first direction, and the third boundary and the fourth boundary are two boundaries of the one or more objects in the first direction.

9. The method according to claim 8, wherein the determining an object center of the first picture comprises:
detecting the one or more objects in the first picture, to obtain position information of a key point in the first picture, wherein the position information of the key point comprises a coordinate of the key point in the first direction;
using a minimum coordinate of the key point in the first direction as a coordinate of the third boundary, and using a maximum coordinate of the key point in the first direction as a coordinate of the fourth boundary; and
determining an axis of symmetry between the third boundary and the fourth boundary as the object center of the first picture based on the coordinate of the third boundary and the coordinate of the fourth boundary.

10. The method according to claim 9, wherein the object is a person image, and the key point is a face.

11. An electronic device, comprising: a memory, a processor, and a display screen, wherein
the processor is coupled to the memory and the display screen, the memory is configured to store computer program code, and the computer program code comprises computer instructions; and
when the computer instructions are executed by the processor, the electronic device is enabled to perform the method according to any one of claims 1 to 10.

12. A computer-readable storage medium, comprising computer instructions, wherein when the computer instructions are run on an electronic device, the electronic device is enabled to perform the method according to any one of claims 1 to 10.
